# EUROPEAN PATENT APPLICATION

(11) **EP 4 465 291 A1**
(43) Date of publication of application: **20.11.2024**
(21) Application number: 23762824.3
(22) Date of filing: 24.02.2023
(51) Int. Cl.: G09G 3/34, H05B 45/34

(54) **BACKLIGHT DRIVING CIRCUIT, CHIP, BACKLIGHT MODULE AND ELECTRONIC DEVICE**

(30) Priority: 04.03.2022 CN 202210212000
(71) Applicant: Huawei Technologies Co., Ltd., Shenzhen, Guangdong 518129 (CN)
(72) Inventor: LI, Tao, Shenzhen, Guangdong 518129 (CN)
(74) Representative: Gill Jennings & Every LLP
(86) International application number: PCT/CN2023/078144
(87) International publication number: WO 2023/165424

(57) **Abstract**

A backlight drive circuit (32), a chip, a backlight module (210), and an electronic device (100) are provided, and relate to the field of display technologies, to decrease a loss of the backlight drive circuit (32). The backlight drive circuit (32) is used in the backlight module (210), where at least one backlight string (Ls) is disposed on an indicator board (213) of the backlight module (210). A first end of a current source (44) is coupled to a cathode of the backlight string (Ls), and an anode of the backlight string (Ls) is coupled to a power supply (41). A second end of the current source (44) is coupled to ground (GND). A control circuit (43) is configured to: detect an electrical signal at the first end of the current source (44) or a control end of the current source (44); and output a control signal to a drive circuit (42) based on the electrical signal. The drive circuit (42) is configured to adjust, based on the control signal, a current flowing through the first end and the second end of the current source (44) and a voltage at the first end of the current source (44).

## Description

This application claims priority to Chinese Patent Application No. 202210212000.2, filed with the China National Intellectual Property Administration on March 4, 2022 and entitled "BACKLIGHT DRIVE CIRCUIT, CHIP, BACKLIGHT MODULE, AND ELECTRONIC DEVICE", which is incorporated herein by reference in its entirety.

### TECHNICAL FIELD

Embodiments of this application relate to the field of display technologies, and in particular, to a backlight drive circuit, a chip, a backlight module, and an electronic device.

### BACKGROUND

Currently, in the liquid crystal display field, a backlight module is used to provide backlight for a liquid crystal panel. A mainstream backlight solution includes a global light control technology and a local dimming (local dimming, or referred to as local light adjustment/light control) technology. With the evolution of backlight technologies, mini light-emitting diodes (mini light-emitting diodes, mini LEDs) are widely used in a backlight panel, and are used as light-emitting units of a light string as a backlight source. Especially in the local light dimming technology, a corresponding backlight area can be turned on or off and adjusted in brightness in real time based on bright and dark fields in a screen picture. In this way, in the picture, the black is blacker, the white is whiter, and the color is more natural and brighter. The visual reality brings a best feeling of immersiveness. In a mini LED backlight solution, generally, a large quantity of channels CH (channels, generally, each channel corresponds to one backlight string (including a plurality of LEDs connected in series), and a backlight drive circuit provides a current to each channel to drive the corresponding backlight string to emit light) are used to drive the plurality of LEDs, and therefore, a power level is high. A larger screen size indicates higher brightness and more backlight channels. In this way, standards such as a high dynamic range 600 (high dynamic range 600, HD R600), an HDR 1000 and an HDR vivid are met. Finally, a backlight power level is increasingly high. Generally, backlight power consumption of a TV product is hundreds of watts. When power conversion efficiency is considered, a power loss cannot be ignored.

However, a relationship between a voltage forward (voltage forward, VF) and a current of the LED is that a higher voltage indicates a larger turn-on current. Under a same turn-on current, the VFs of the LEDs are different due to manufacturing processes and materials of the LEDs. In this way, due to a difference of the manufacturing processes of the LEDs, the VFs of the LEDs are finally different. Voltages of channels (generally, a voltage V_{CHx} of the channel is a difference between an anode voltage Vout of a backlight string and a voltage drop V_{LS} (a sum of VFs of LEDs connected in series on the light string) of the light string) are also different. Because the VFs of the LEDs between the channels are different, under a same current I_{LED}, a total voltage forward (namely, V_{LS}s) of backlight strings connected to each channel is different, and voltages V_{CHx} of the channels are also different. In this way, when a voltage V_{CHx} of a channel is high, a loss of the backlight drive circuit is increased. In addition, because in the mini LED backlight solution, a plurality of channels are used, and a current source (usually including a metal-oxide-semiconductor field-effect transistor (metal-oxide-semiconductor field-effect transistor, MOSFET)) that provides a current to the backlight string on each channel in the backlight drive circuit is integrated with a drive circuit of the current source in a chip, to save a layout area of a board layout. Therefore, the loss is released on the chip in a form of heat, causing the chip to heat up and even damaging the chip.

### SUMMARY

Embodiments of this application provide a backlight drive circuit, a chip, a backlight module, and an electronic device, to decrease a loss of the backlight drive circuit.

According to a first aspect, a backlight drive circuit is provided. The backlight drive circuit is used in a backlight module. At least one backlight string is disposed on an indicator board of the backlight module, and the backlight string includes at least one light-emitting unit connected in series. The backlight drive circuit includes a control circuit, at least one drive circuit, and at least one current source. A first end of the current source is configured to be coupled to a cathode of the backlight string, and an anode of the backlight string is configured to be coupled to a power supply. A second end of the current source is configured to be coupled to ground. The drive circuit is coupled to a control end of the current source. The control circuit is coupled to the drive circuit, and the control circuit is further coupled to the first end of the current source or the control end of the current source. The control circuit is configured to detect an electrical signal at the first end of the current source or the control end of the current source. The control circuit is further configured to output a control signal to the drive circuit based on the electrical signal. The drive circuit is configured to adjust, based on the control signal, a current flowing through the first end and the second end of the current source and a voltage at the first end of the current source. In this way, the current source may be adjusted by detecting the electrical signal at the first end of the current source or the control end of the current source, to dynamically adjust the current flowing through the first end and the second end of the current source, and the voltage at the first end of the current source. This avoids an excessively high loss when the current source provides a current to a backlight string corresponding to the current source.

In a possible implementation, the drive circuit includes an operational amplifier and a first switch. The current source includes a drive transistor and a first resistor. A first end of the drive transistor is coupled to the first end of the current source, a second end of the drive transistor is coupled to the second end of the current source through the first resistor, and a control end of the drive transistor is coupled to the control end of the current source. A positive input end of the operational amplifier is coupled to the control circuit, and a negative input end of the operational amplifier is coupled to the second end of the drive transistor. An output end of the operational amplifier is coupled to a first end of the first switch, and a second end of the first switch is coupled to the control end of the drive transistor. The control signal includes a voltage signal and a switch control signal. The positive input end of the operational amplifier is configured to receive the voltage signal, and a control end of the first switch is configured to receive the switch control signal. When the switch control signal is used to turn on the first switch, the voltage signal is used to control a current flowing through the first end and the second end of the drive transistor, and the switch control signal is used to control a voltage at the first end of the drive transistor.

In a possible implementation, if the control circuit determines that a voltage corresponding to the electrical signal is greater than a first threshold, the control circuit controls, based on the control signal, the drive circuit to increase the current flowing through the first end and the second end of the current source, and decrease the voltage at the first end of the current source. In this way, when the control circuit determines, based on an electrical signal at a first end of a current source or a control end of a current source, that a corresponding voltage is greater than a threshold, it indicates that a voltage at the first end of the current source is excessively high, that is, when the current source provides a current to a backlight string corresponding to the current source, an excessively high loss is generated. However, if the voltage at the first end of the current source is directly decreased by reducing a current, it may not be ensured that the backlight string connected to the current source emits light normally. Therefore, in the solution of this application, if the control circuit determines that the voltage corresponding to the electrical signal is greater than the first threshold, the control circuit controls, based on the control signal, the drive circuit to increase the current flowing through the first end and the second end of the current source, and decrease the voltage at the first end of the current source. Therefore, when it is ensured that the backlight string emits light normally, because the voltage at the first end of the current source is decreased, a loss generated on the current source is also decreased, and an overall loss of the backlight drive circuit is decreased.

In a possible implementation, if the control circuit determines that a voltage corresponding to the electrical signal is less than a second threshold, the control circuit controls, based on the control signal, the drive circuit to decrease the current flowing through the first end and the second end of the current source, and increase the voltage at the first end of the current source. In this way, this embodiment of this application also provides an application scenario in which the voltage at the first end of the current source is required to be increased, and the current flowing through the first end and the second end of the current source is required to be decreased. It should be noted that, when the control circuit adjusts (decreases or increases) the voltage at the first end of the current source, the adjustment may be performed based on a specific step. Different steps may be set based on different application scenarios. For example, for a mobile phone with low power consumption, a small step may be set, and for a large-screen device with high power consumption, a large step may be set, to ensure adjustment precision and shorten voltage adjustment time as much as possible.

In a possible implementation, a bandgap reference source is further included. The bandgap reference source is connected between the drive circuit and the control circuit. The bandgap reference source is configured to adjust the voltage signal based on a predetermined proportion. In this way, when a current of the backlight string is controlled, because the bandgap reference source may adjust the voltage signal based on the predetermined proportion, lower current precision can be implemented, and more accurate backlight brightness adjustment can be implemented.

In a possible implementation, the first switch includes a first transistor and a second transistor. A first end of the first transistor is coupled to the ground, a second end of the first transistor is coupled to a control end of the second transistor, and a control end of the first transistor is coupled to the control circuit. A first end of the second transistor is coupled to the output end of the operational amplifier, a second end of the second transistor is coupled to the control end of the drive transistor, and the control end of the second transistor is further coupled to the output end of the operational amplifier through a second resistor. The first transistor is configured to periodically turn on the first end of the first transistor and the second end of the first transistor under control of the switch control signal. The second transistor is configured to: when the first end of the first transistor and the second end of the first transistor are turned on, turn on the first end of the second transistor and the second end of the second transistor, so as to transmit a signal at the output end of the operational amplifier to the control end of the drive transistor. In this solution, a specific implementation of the first switch is provided. Certainly, it may be understood that the first switch may alternatively be in another form.

In a possible implementation, the first transistor includes an N-type transistor, and the second transistor includes a P-type transistor. The first end of the first transistor is a source of the N-type transistor. The second end of the first transistor is a drain of the N-type transistor, and the control end of the first transistor is a gate of the N-type transistor. The first end of the second transistor is a source of the P-type transistor. The second end of the second transistor is a drain of the P-type transistor, and the control end of the second transistor is a gate of the P-type transistor. In this way, when the N-type transistor is turned on, a current flows from a drain (drain, d) electrode to a source (source, s) electrode. When the P-type transistor is turned on, a current flows from an s electrode to a d electrode. In addition, the s electrode of the N-type transistor is connected to the ground GND at a fixed voltage, which facilitates a circuit design. In addition, when the N-type transistor is turned on, the second resistor provides a fixed voltage difference between the s electrode and the g electrode of the P-type transistor, provided that a voltage at the s electrode is greater than a voltage at the g electrode. In addition, a Q13 may be turned on if a threshold condition of turn-on is met.

In a possible implementation, at least one comparator and a reference voltage generation circuit are further included. A positive input end of the comparator is coupled to the first end of the current source or the control end of the current source, a negative input end of the comparator is coupled to the reference voltage generation circuit, and an output end of the comparator is coupled to the control circuit. The reference voltage generation circuit is configured to generate a first reference voltage. The comparator is configured to: compare the voltage at the first end of the current source with the first reference voltage, or compare a voltage at the control end of the current source with the first reference voltage, and output a comparison result at the output end of the comparator. The control circuit is configured to determine the electrical signal at the first end of the current source or the control end of the current source based on the comparison result. In this way, the control circuit may detect a signal at the first end or the control end of the current source in the digital domain.

In a possible implementation, a selector is further included. The selector includes a plurality of input ends, one output end, and at least one control end. The first end of the current source or the control end of the current source is coupled to the input end of the selector, the output end of the selector is coupled to the control circuit, and the at least one control end of the selector is coupled to the control circuit. The control circuit is configured to output a gating control signal to the selector through the at least one control end of the selector. The selector is configured to turn on any input end of the selector and the output end of the selector based on the gating control signal. In some scenarios, each indicator sub board of the backlight module needs to provide a backlight string of 16, 32, 48, or more channels. Due to limitation of a quantity of ports provided by the control circuit, when the control circuit cannot provide ports corresponding to a quantity of channels to implement detection of the electrical signal at the first end or the control end of the current source, the solution provided in this possible implementation may be used. In this way, an electrical signal at a first end of each current source is detected in a time division manner, so that complexity of the control circuit is reduced.

According to a second aspect, a chip is provided. The chip is used in a backlight module. At least one backlight string is disposed on an indicator board of the backlight module, the backlight string includes at least one light-emitting unit connected in series, and the chip includes at least one drive circuit and at least one current source. A first end of the current source is configured to be coupled to a cathode of the backlight string, and an anode of the backlight string is coupled to a power supply. A second end of the current source is configured to be coupled to ground. The drive circuit is coupled to a control end of the current source. The drive circuit is further configured to be coupled to the control circuit. The first end of the current source or the control end of the current source is further configured to be coupled to the control circuit. The control circuit is configured to detect an electrical signal at the first end of the current source or the control end of the current source. The control circuit is further configured to output a control signal to the drive circuit based on the electrical signal. The drive circuit is configured to adjust, based on the control signal, a current flowing through the first end and the second end of the current source and a voltage at the first end of the current source.

In a possible implementation, the drive circuit includes an operational amplifier and a first switch. The current source includes a drive transistor and a first resistor. A first end of the drive transistor is coupled to the first end of the current source, a second end of the drive transistor is coupled to the second end of the current source through the first resistor, and a control end of the drive transistor is coupled to the control end of the current source. A positive input end of the operational amplifier is coupled to the control circuit, and a negative input end of the operational amplifier is coupled to the second end of the drive transistor. An output end of the operational amplifier is coupled to a first end of the first switch, and a second end of the first switch is coupled to the control end of the drive transistor. The control signal includes a voltage signal and a switch control signal. The positive input end of the operational amplifier is configured to receive the voltage signal, and a control end of the first switch is configured to receive the switch control signal. When the switch control signal is used to turn on the first switch, the voltage signal is used to control a current flowing through the first end and the second end of the drive transistor, and the switch control signal is used to control a voltage at the first end of the drive transistor.

In a possible implementation, if the control circuit determines that a voltage corresponding to the electrical signal is greater than a first threshold, the control circuit controls, based on the control signal, the drive circuit to increase the current flowing through the first end and the second end of the current source, and decrease the voltage at the first end of the current source.

In a possible implementation, if the control circuit determines that a voltage corresponding to the electrical signal is greater than a second threshold, the control circuit controls, based on the control signal, the drive circuit to decrease the current flowing through the first end and the second end of the current source, and increase the voltage at the first end of the current source.

In a possible implementation, a bandgap reference source is further included. The bandgap reference source is connected between the positive input end of the operational amplifier and the control circuit. The bandgap reference source is configured to adjust the voltage signal based on a predetermined proportion.

In a possible implementation, the first switch includes a first transistor and a second transistor. A first end of the first transistor is coupled to the ground, a second end of the first transistor is coupled to a control end of the second transistor, and a control end of the first transistor is coupled to the control circuit. A first end of the second transistor is coupled to the output end of the operational amplifier, a second end of the second transistor is coupled to the control end of the drive transistor, and the control end of the second transistor is further coupled to the output end of the operational amplifier through a second resistor. The first transistor is configured to periodically turn on the first end of the first transistor and the second end of the first transistor under control of the switch control signal. The second transistor is configured to: when the first end of the first transistor and the second end of the first transistor are turned on, turn on the first end of the second transistor and the second end of the second transistor, so as to transmit a signal at the output end of the operational amplifier to the control end of the drive transistor.

In a possible implementation, the first transistor includes an N-type transistor, and the second transistor includes a P-type transistor. The first end of the first transistor is a source of the N-type transistor. The second end of the first transistor is a drain of the N-type transistor, and the control end of the first transistor is a gate of the N-type transistor. The first end of the second transistor is a source of the P-type transistor. The second end of the second transistor is a drain of the P-type transistor, and the control end of the second transistor is a gate of the P-type transistor.

In a possible implementation, at least one comparator and a reference voltage generation circuit are further included. A positive input end of the comparator is coupled to the first end of the current source or the control end of the current source, a negative input end of the comparator is coupled to the reference voltage generation circuit, and an output end of the comparator is coupled to the control circuit. The reference voltage generation circuit is configured to generate a first reference voltage. The comparator is configured to: compare the voltage at the first end of the current source with the first reference voltage, or compare a voltage at the control end of the current source with the first reference voltage, and output a comparison result at the output end of the comparator. The control circuit is configured to determine the electrical signal at the first end of the current source or the control end of the current source based on the comparison result.

In a possible implementation, a selector is further included. The selector includes a plurality of input ends, one output end, and at least one control end. The first end of the current source or the control end of the current source is coupled to the input end of the selector, the output end of the selector is coupled to the control circuit, and the at least one control end of the selector is coupled to the control circuit. The control circuit is configured to output a gating control signal to the selector through the at least one control end of the selector. The selector is configured to turn on any input end of the selector and the output end of the selector based on the gating control signal.

In a possible implementation, the control circuit is included in a chip.

According to a third aspect, a backlight module is provided. The backlight module includes a backplane, a flat plate, an indicator board, and a diffusion plate. The flat plate is located between the backplane and the indicator board, and the indicator board is located between the flat plate and the diffusion plate. At least one backlight string is disposed on the indicator board, and the backlight drive circuit or the chip is disposed on the backplane.

According to a fourth aspect, an electronic device is provided, including the foregoing backlight module and a liquid crystal panel disposed on the backlight module.

For technical effects implemented in the second aspect, the third aspect, and the fourth aspect, refer to descriptions in the first aspect or any possible implementation. Details are not described herein again.

### BRIEF DESCRIPTION OF DRAWINGS

FIG. 1 is a diagram of an overall structure of an electronic device according to an embodiment of this application;
FIG. 2 is a diagram of an exploded structure of a screen assembly according to an embodiment of this application;
FIG. 3 is a diagram of a structure of an indicator sub board according to an embodiment of this application;
FIG. 4 is a diagram of a structure of an indicator sub board according to another embodiment of this application;
FIG. 5 is a diagram of a structure of a connector according to an embodiment of this application;
FIG. 6 is a diagram of a connection structure of a control module and a connector according to an embodiment of this application;
FIG. 7 is a diagram of a backlight drive circuit according to an embodiment of this application;
FIG. 8 is a diagram of a backlight drive circuit according to an embodiment of this application;
FIG. 9 is a diagram of a partial structure of a backlight drive circuit according to an embodiment of this application;
FIG. 10 is a diagram of current and voltage curves of an LED according to an embodiment of this application;
FIG. 11 is a diagram of a backlight drive circuit according to another embodiment of this application;
FIG. 12 is a diagram of a backlight drive circuit according to still another embodiment of this application;
FIG. 13 is a diagram of a partial structure of a backlight drive circuit according to another embodiment of this application;
FIG. 14 is a diagram of a partial structure of a backlight drive circuit according to still another embodiment of this application;
FIG. 15 is a diagram of a backlight drive circuit according to yet another embodiment of this application;
FIG. 16 is a diagram of a backlight drive circuit according to another embodiment of this application;
FIG. 17 is a diagram of a partial structure of a backlight drive circuit according to yet another embodiment of this application;
FIG. 18 is a diagram of a backlight drive circuit according to still another embodiment of this application;
FIG. 19 is a diagram of a backlight drive circuit according to yet another embodiment of this application;
FIG. 20 is a diagram of a backlight drive circuit according to another embodiment of this application;
FIG. 21 is a diagram of a backlight drive circuit according to still another embodiment of this application;
FIG. 22 is a diagram of a backlight drive circuit according to yet another embodiment of this application;
FIG. 23 is a diagram of a chip according to an embodiment of this application; and
FIG. 24 is a diagram of a chip according to another embodiment of this application.

### DESCRIPTION OF EMBODIMENTS

The following clearly and completely describes the technical solutions in some embodiments of this application with reference to the accompanying drawings. It is clear that the described embodiments are merely some but not all of embodiments of this application. All other embodiments obtained by a person of ordinary skill in the art based on embodiments of this application fall within the protection scope of this application.

Unless otherwise specified in the context, in the entire specification and claims, the term "comprise (comprise)" and other forms thereof such as a third person singular form "comprises (comprises)" and a present participle form "comprising (comprising)" are interpreted as "open and inclusive", that is, "include, but not limited to". In the descriptions of the specification, terms such as "one embodiment (one embodiment)", "some embodiments (some embodiments)", "example embodiments (example embodiments)", "example (example)", "specific example (specific example)" or "some examples (some examples)" are intended to indicate that specific features, structures, materials, or characteristics related to embodiments or examples are included in at least one embodiment or example of this application. The foregoing schematic representations of the terms do not necessarily refer to a same embodiment or example. Further, the specific feature, structure, material, or characteristic may be included in any one or more embodiments or examples in any appropriate manner.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two. In addition, the use of "based on" means openness and inclusiveness, since processes, steps, calculation, or other actions "based on" one or more of conditions or values may be based in practice on additional conditions or values outside the described values.

In the descriptions of this application, it should be understood that directions or location relationships indicated by the terms such as "center", "up", "down", "front", "rear", "left", "right", "vertical", "horizontal", "top", "bottom", "inside", and "outside" are based on the directions or the location relationships shown in the accompanying drawings, and are merely intended to describe this application and simplify the descriptions, but not intended to indicate or imply that an indicated apparatus or component shall have a specific direction or be formed and operated in a specific direction, and therefore cannot be understood as a limitation on this application. In the descriptions of this application, unless otherwise specified, "a plurality of" means two or more than two.

The transistor provided in embodiments of this application may be a metal-oxide-semiconductor field-effect transistor (Metal-Oxide-Semiconductor Field-Effect Transistor, MOSFET). In embodiments of this application, the transistor is classified into two types: an N (negative, negative)-type transistor and a P (positive, positive)-type transistor. The transistor includes a source (source), a drain (drain), and a gate (gate). Turn-on (enabling) or turn-off (disabling cut-off, disconnection) of the transistor may be controlled by controlling a level input to the gate of the transistor. When the transistor is enabled, the source and the drain are turned on to generate a turn-on current. In addition, when gate levels of the transistor are different, magnitudes of turn-on currents generated between the source and the drain are also different. When the transistor is disabled, the source and the drain are not turned on, and no current is generated. In embodiments of this application, the gate of the transistor is also referred to as a control end, the source is referred to as a first end, and the drain is referred to as a second end. Alternatively, the gate is referred to as a control end, the drain is referred to as a first end, and the source is referred to as a second end. In addition, the N-type transistor is enabled when a level at a control end is a high level. In this case, the first end and the second end are turned on, and an enabling is generated between the first end and the second end. The N-type transistor is disabled when a level at a control end is a low level. In this case, the first end and the second end are not turned on, and no current is generated. The P-type transistor is enabled when a level at a control end is a low level. In this case, the first end and the second end are turned on, and an enabling current is generated. The P-type transistor is disabled when a level at a control end is a high level. In this case, the first end and the second end are not turned on, and no current is generated. For transistors used by switches in the following solutions, refer to descriptions herein.

The following describes technical solutions of this application with reference to accompanying drawings.

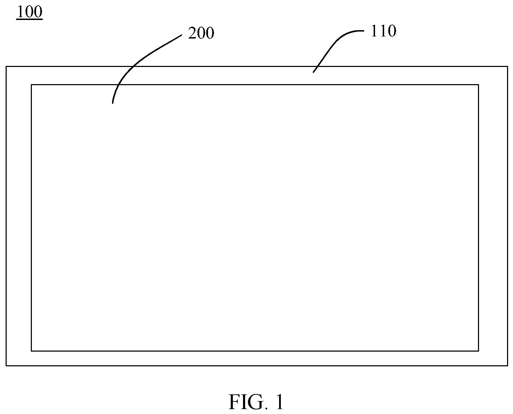

FIG. 1 is a diagram of a structure of an electronic device 100 according to an embodiment of this application. The electronic device 100 may be a screen-type electronic device like an advertisement screen (a billboard), a display, a television (TV, for example, a smart screen), a notebook computer, a tablet computer, or an in-vehicle device. Optionally, in some scenarios, the electronic device 100 may be a device like a mobile phone, an e-reader, or a wearable device. In the embodiment shown in FIG. 1, an example in which the electronic device 100 is a television is used for description.

The electronic device 100 may include a housing 110 and a screen assembly 200.

The housing 110 may include a frame and a rear cover. The frame may be disposed around a peripheral edge of the rear cover. The housing 110 may include, for example, a middle frame of the electronic device 100. In an example, the middle frame of the electronic device 100 may be accommodated in an inner periphery of the frame. In another example, the middle frame of the electronic device 100 may be used as the frame of the housing 110. The screen assembly 200 may be an assembly that provides a display function for the electronic device 100. A user may view the screen assembly 200 to enjoy media resources such as an image and a video. The screen assembly 200 may be installed on the housing 110. A peripheral edge of the screen assembly 200 may abut against an inner edge of the frame. The frame may fasten the screen assembly 200 to the housing 110. The screen assembly 200 and the rear cover may be respectively mounted on two sides of the frame, so that the housing 110 may be a component inside the electronic device, especially a component on the screen assembly 200, to provide a mechanical protection function. The screen assembly 200 may be, for example, fastened to the middle frame of the electronic device 100.

The electronic device 100 may further include a control module. A specific implementation form of the control module may include, for example, a processor, a controller, a connector, a drive board, an integrated circuit, a chip, and a power supply. In embodiments of this application, the control module may specifically include a backlight drive circuit. The backlight drive circuit may be in a form of a chip, integrated into a drive board, or the like. In addition, in embodiments of this application, the control module may specifically include a power supply, and one or more of a control circuit, a drive circuit, and a current source in the backlight drive circuit. For example, a control module may be configured on the screen assembly 200, and the control module may be accommodated in the housing 110. In an example, the control module may include at least one communication interface, a bus, at least one processor, and at least one memory. The at least one communication interface, the at least one processor, and the at least one memory may communicate with each other through the bus. The at least one communication interface may be configured to receive and send signals. For example, a light-emitting unit of the screen assembly 200 may be connected to one of the communication interfaces, so that the control module can trigger the light-emitting unit to emit light. The at least one memory is configured to store application code. The application code may include, for example, code for controlling the light-emitting unit to emit light or not to emit light. The at least one processor may be configured to execute the foregoing application code, to control the light-emitting unit. In this application, "at least one" includes, for example, one or more than one.

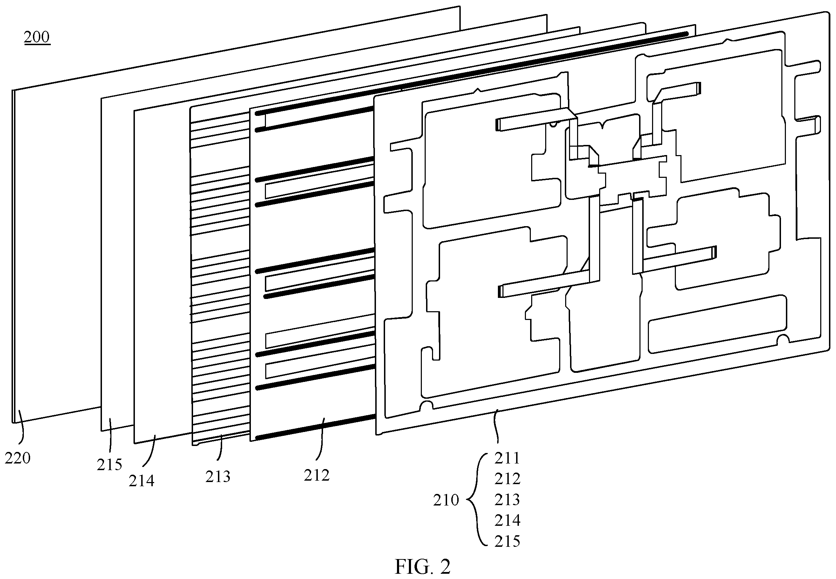

With reference to FIG. 2, the following describes the screen assembly 200 provided in embodiments of this application. FIG. 2 is an exploded view of the screen assembly 200. The screen assembly 200 shown in FIG. 2 includes a backlight module 210 and a liquid crystal panel 220 disposed on a light outlet side of the backlight module 210. The backlight module 210 may include components such as a backplane 211, a flat plate 212, an indicator board 213, a diffusion plate 214, and an optical membrane 215 that are disposed in a stacked manner. Certainly, FIG. 2 merely provides an example of a general structure of the backlight module 210. In some examples, the backlight module 210 may further include more or fewer components than those described above.

The backplane 211 may have functions such as supporting the electronic device 100 and providing mechanical protection for an electronic component in the electronic device 100. A material of the backplane 211 may be a material that meets a mechanical strength requirement and may play a supporting role. For example, the backplane 211 may be made of a metal material like stainless steel, an aluminum alloy, a zinc alloy, or a titanium alloy. For another example, the backplane 211 may be made of a non-metal material like resin. The backplane 211 may include a first backplane end face and a second backplane end face. The first backplane end face is close to the indicator board 213, and the second backplane end face is away from the indicator board 213. For a user, the first backplane end face may correspond to a front side of the electronic device 100, and the second backplane end face may correspond to a rear side of the electronic device 100. The front side of the electronic device 100 may be a side that is of the electronic device 100 and that is frequently observed when the user uses the electronic device 100. The rear side of the electronic device 100 may be disposed opposite to the front side of the electronic device 100, and the rear side of the electronic device 100 may be a side that is of the electronic device 100 and that is not frequently observed when the user uses the electronic device 100. For example, the electronic device 100 may be a television, a side on which a screen assembly is mounted of the television may be a front side of the television, and a side on which a rear cover is mounted of the television may be a rear side of the television. The first backplane end face corresponds to the front side of the electronic device 100, which may mean that the user can observe the first backplane end face while observing the backplane 211 along the front side of the electronic device 100. The second backplane end face corresponds to the rear side of the electronic device 100, which may mean that the user can observe the second backplane end face while observing the backplane 211 along the rear side of the electronic device 100. For ease of description, the first backplane end face may be referred to as a front face of the backplane 211, and the second backplane end face may be referred to as a rear face of the backplane 211. In a possible example, the first backplane end face may be fastened to the rear cover of the housing 110. For example, the first backplane end face may be fastened to the rear cover of the housing 110 by using a mechanical connecting piece like as a screw, a double-sided tape, or foam. In another possible example, the backplane 211 may serve as the rear cover of the housing 110.

The flat plate 212 may be located between the indicator board 213 and the backplane 211. The flat plate 212 may be configured to provide support for the indicator board 213, so as to maintain or ensure flatness of the indicator board 213. The flat plate 212 may be a conductive material having a specific rigidity. For example, the flat plate 212 may be an aluminum plate. For example, the flat plate 212 may be fastened to the backplane 211 by using a mechanical connecting piece like a double-sided tape or foam. In a possible scenario, in a process of transporting the electronic device 100, the electronic device 100 may collide, fall, or the like. In this case, the electronic device 100 may bear an external force to a specific extent. The backplane 211 may be correspondingly deformed to resist the external force. If the indicator board 213 is directly fastened to the backplane 211, the indicator board 213 may be significantly deformed along with the backplane 211. To avoid the foregoing case, transportation difficulty of the electronic device 100 is increased. The backplane 211 is significantly deformed, consequently, this is not conducive to display effect of the indicator board 213. For example, because light mixing distances of different areas of the indicator board 213 are different, display problems such as uneven brightness and shadowing may occur in the electronic device 100. The flat plate 212 is disposed between the backplane 211 and the indicator board 213, so that the flat plate 212 may play a transition role between the indicator board 213 and the backplane 211 in terms of a deformation amount. A deformation amount of the flat plate 212 may be less than a deformation amount of the backplane 211, so that a deformation amount of the indicator board 213 may decrease. That is, when the backplane 211 is significantly deformed, the deformation amount of the indicator board 213 may be as small as possible or as unobvious as possible.

The optical membrane 215 may change a frequency of light from the indicator board 213. The optical membrane 215 may include a quantum dot. For example, the indicator board 213 may emit high-energy blue light. The blue light may stimulate the quantum dot packaged in the optical membrane 215, so that the quantum dot may convert the blue light emitted by the indicator board 213 into white light (the quantum dot may be a nano-scale semiconductor; by applying a specific electric field or light pressure to the quantum dot, the quantum dot may emit light of a specific frequency). The quantum dot may be formed, for example, in a chemical coating, or a phosphor. In a possible example, light emitted from the optical membrane 215 may enter, for example, the liquid crystal panel 220. The liquid crystal panel 220 may include a liquid crystal layer and a light filter layer. A liquid crystal at the liquid crystal layer may control the liquid crystal unit to be enabled or disabled, so as to control light intensity of white light passing through the liquid crystal unit. The liquid crystal unit is enabled, so that the white light passing through the liquid crystal unit can illuminate the light filter layer. The light filter layer may include a red light filter, a green light filter, and a blue light filter. The red light filter may be configured to convert white light into red light. The green light filter may be configured to convert white light into green light. The blue light filter may be configured to convert white light into blue light. Therefore, the electronic device 100 may be controlled to emit light of a plurality of colors, to display a color pattern.

In another example, the diffusion plate 214 may include a quantum dot, so that the diffusion plate 214 may change a frequency of light from the indicator board 213. In some embodiments, the diffusion plate 214 and the optical membrane 215 may be integrally formed. The light emitted by the indicator board 213 may be directly emitted into the diffusion plate 214 after only light mixing processing is performed, and no other optical processing is performed. In other words, in some possible scenarios, no quantum dot may be configured on a light-emitting unit of the indicator board 213. This helps reduce structural complexity of the indicator board 213, and helps the light-emitting units to be closely arranged on the indicator board 213. For example, a size of the phosphor is usually greater than a size of the light-emitting unit of the indicator board 213. Therefore, packaging the phosphor on the indicator board 213 is not conducive to close arrangement of the light-emitting units.

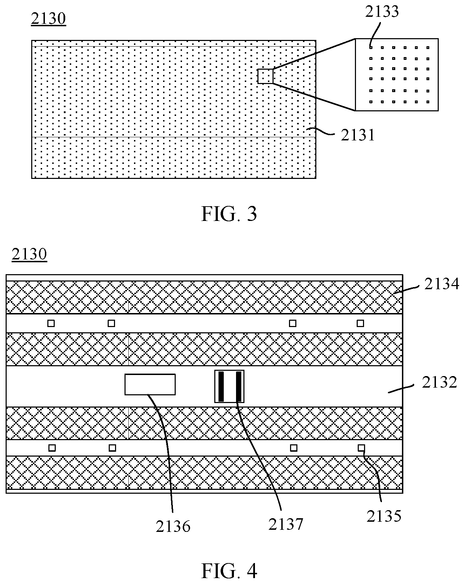

In some examples, the indicator board 213 may alternatively include a plurality of indicator sub boards 2130 distributed in an array. The following uses one indicator sub board 2130 as an example for description. The indicator sub board 2130 may include a first indicator board end face 2131 and a second indicator board end face 2132. FIG. 3 is a diagram of a structure of the first indicator board end face 2131 of the indicator sub board 2130 according to an embodiment of this application. Light emitted by the indicator sub board 2130 may be emitted from the first indicator board end face 2131 of the indicator sub board 2130. The first indicator board end face 2131 of the indicator sub board 2130 may be a surface that is of the indicator sub board 2130 and that is close to the diffusion plate 214 and away from the backplane 211. With reference to FIG. 3, the following describes a structure of the first indicator board end face 2131 of the indicator sub board 2130. The indicator sub board 2130 may include a plurality of light-emitting units 2133. For example, the indicator sub board 2130 may include a plurality of light-emitting units 2133 arranged in an array. The light-emitting unit 2133 may be, for example, a chip having a light-emitting function. The light-emitting unit 2133 may alternatively be a light-emitting diode LED. Several light-emitting units located in a same column or a same row may be connected to form a backlight string. FIG. 4 is a diagram of a structure of the second indicator board end face 2132 of the indicator sub board 2130 according to an embodiment of this application. The second indicator board end face 2132 of the indicator sub board 2130 may be disposed close to the backplane 211 and away from the diffusion plate 214. With reference to FIG. 4, the following describes a structure of the second indicator board end face 2132 of the indicator sub board 2130. A double-sided tape may be disposed on the second indicator board end face 2132 of the indicator sub board 2130, and the double-sided tape may fasten the indicator sub board 2130 to the flat plate 212. In a possible example, the double-sided tape may be a thermally conductive adhesive 2134. Because the indicator sub board 2130 may generate high heat when working, the thermally conductive adhesive 2134 helps transfer the heat of the indicator sub board 2130 to the flat plate 212, thereby improving heat dissipation of the electronic device 100.

A conductive elastic sheet 2135 may be further disposed on the second indicator board end face 2132 of the indicator sub board 2130. One end of the conductive elastic sheet 2135 may be electrically connected to the indicator sub board 2130. Another end of the conductive elastic sheet 2135 may press against the flat plate 212. When the indicator sub board 2130 works, the light-emitting unit 2133 of the indicator sub board 2130 may accumulate electric charges. The indicator sub board 2130 may be grounded by using the conductive elastic sheet 2135. This helps improve electromagnetic compatibility (electromagnetic compatibility, EMC) of the electronic device 100.

The indicator sub board 2130 may further include one or more backlight drive circuits 2136 and one or more connectors 2137. By using the connector 2137, a signal related to the indicator sub board 2130 may be input to the backlight drive circuit 2136, to control the backlight drive circuit 2136 to provide a current to the light-emitting unit 2133, so as to control a bright/dark state of the light-emitting unit 2133. In this way, the backlight drive circuit 2136 may control the bright/dark state of the light-emitting unit 2133 based on a control signal. When the light-emitting unit 2133 is in a bright state, the light-emitting unit 2133 may be driven by the backlight drive circuit 2136. Optionally, when the light-emitting unit 2133 is in a bright state, brightness of the light-emitting unit 2133 is adjustable. When the light-emitting unit 2133 is in a dark state, the light-emitting unit 2133 may be turned off by the backlight drive circuit 2136 (that is, the light-emitting unit 2133 may not be driven).

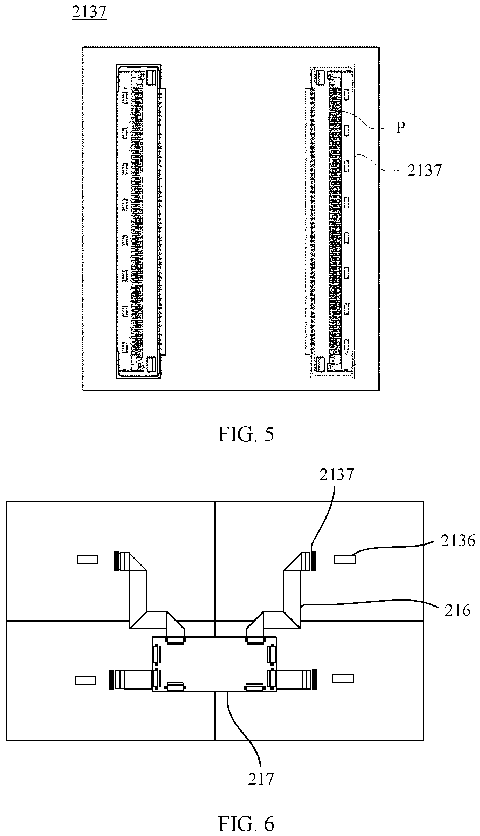

As shown in a partial enlarged diagram of the connector 2137 provided in FIG. 5, in an example, the connector 2137 may include a plurality of connector ports P (also referred to as pins, pins). For example, the connector 2137 may include 30 to 100 connector ports P. Correspondingly, the backlight drive circuit 2136 may include a plurality of signal input ports corresponding to the plurality of connector ports. The plurality of connector ports and the plurality of signal input ports may be electrically connected in a one-to-one, one-to-many, or many-to-many manner. The connector port P may be configured to transmit a signal related to the indicator sub board 2130. Certainly, when the backlight drive circuit 2136 is disposed on the foregoing control module, the current of the light-emitting unit 2133 may alternatively be directly transmitted to the indicator sub board 2130 through the connector port P. The backlight drive circuit 2136 may be configured to: drive a backlight string formed by connecting one or more light-emitting units 2133 of the indicator sub board 2130 in series, and control light-emitting of each light-emitting unit 2133 of the indicator sub board 2130. For example, the backlight drive circuit 2136 may turn off one or more light-emitting units 2133 connected in series in one backlight string, control brightness of one or more light-emitting units 2133 connected in series in one backlight string, and the like. Certainly, FIG. 6 provides only an example. In some solutions, it is not limited to that the entire backlight drive circuit 2136 is disposed on the indicator sub board 2130, or some structures or modules in the backlight drive circuit 2136 are disposed on the indicator sub board 2130, or the entire backlight drive circuit 2136 is disposed on the control module 217.

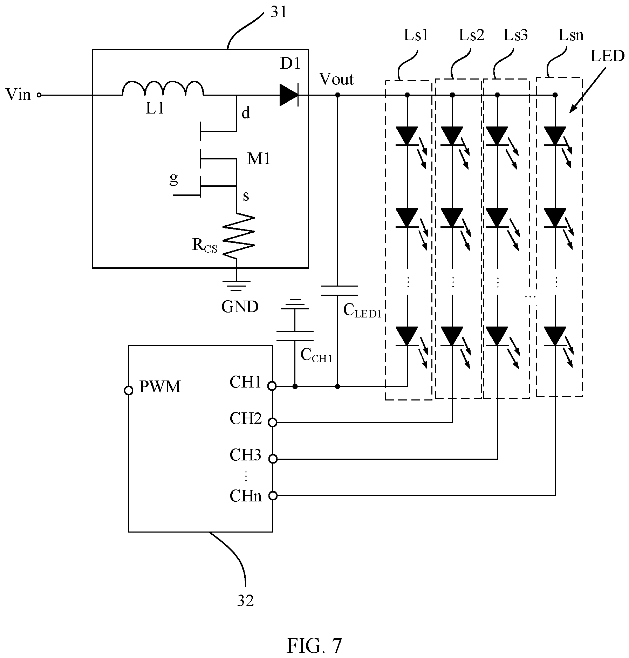

In an example, the control module 217 may include a power supply 31 and a backlight drive circuit 32 shown in FIG. 7. The power supply 31 may use a switch circuit. As shown in FIG. 7, an input port Vin of the power supply 31 may be coupled to a battery or an external adapter, to provide an input voltage to the switch circuit. An output port Vout of the power supply 31 may be coupled to an anode of each light string, to provide an output voltage to the light string. The switch circuit herein is specifically configured to: perform voltage buck conversion or voltage boost conversion on the input voltage of the power supply 31 and then output an output voltage to the output port Vout. For example, the switch circuit specifically includes an inductor L1, a diode D1, a switching transistor M1, and a resistor Res. The inductor L1 and the diode D1 are connected in series between the input port Vin and the output port Vout. An anode of the diode D1 is electrically connected to the inductor L1, and a cathode of the diode D1 is electrically connected to the output port Vout. A drain (drain, d) of the switching transistor M1 is electrically connected to the anode of the diode D1, and a source (source, s) of the switching transistor M1 is connected to ground GND through the resistor Res. In this way, a switch signal is input to a gate (gate, g) of the switching transistor M1, to periodically control an on state of the switching transistor M1, thereby implementing voltage conversion. As shown in FIG. 7, the backlight drive circuit 32 may specifically include a plurality of (n) current output channels CHs (channels, CH1, CH2, ..., CHn), where each current output channel may provide a current to each backlight string Ls (Ls1, Ls2, Ls3, ..., Lsn) under control of a respective control signal (for example, a pulse width modulation (pulse width modulation, PWM) signal), so as to implement light-emitting control on the light-emitting unit in the backlight string. Generally, the backlight drive circuit 32 may be implemented in a form of a chip. As shown in FIG. 7, a PWM signal and each channel CH may pass through an output/input pin of the chip.

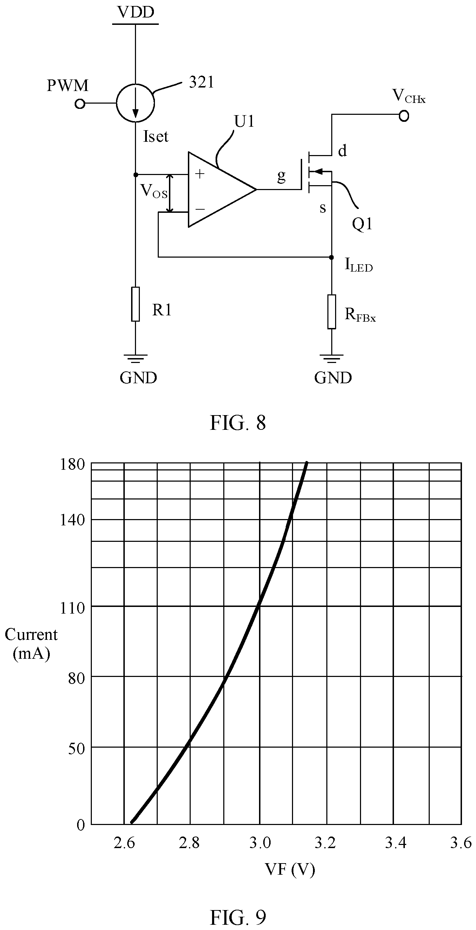

As shown in FIG. 8, a specific implementation of a circuit of each channel in the backlight drive circuit 32 is provided. The backlight drive circuit 32 may include circuit structures provided in FIG. 8, and a quantity of circuit structures is equivalent to a quantity of backlight strings (namely, a quantity of channels). Specifically, the circuit includes a current source 321, an operational amplifier U1, a drive transistor Q1, a resistor R1, and a resistor R_{FBx}. A first end of the current source 321 is coupled to a power supply end VDD (the power supply end VDD may be coupled to the voltage output end Vout of the power supply 31). A second end of the current source is coupled to the ground GND through the resistor R1, the second end of the current source 321 is coupled to a positive input end (+) of the operational amplifier U1, and a control end of the current source 321 is configured to receive a PWM signal. A gate g of the drive transistor Q1 is coupled to an output end of the operational amplifier U1, a source s of the drive transistor Q1 is coupled to the ground GND through the resistor R_{FEx}, the source s of the drive transistor Q1 is coupled to a negative input end (-) of the operational amplifier U1, and a drain d of the drive transistor Q1 is coupled to a cathode of a light string, and provides a channel voltage V_{CHx} to the cathode of the light string. In this way, because the resistor R1 and the resistor R_{FBx} satisfy a relationship R1/R_{FBx}=K_{Iset}, when a current Iset output by the current source 321 is controlled and adjusted by using the PWM signal, the operational amplifier may perform an amplification operation based on a voltage difference Vos between the positive input end (+) and the negative input end (-) to output a signal to adjust an on state of the drive transistor Q1, so as to adjust a magnitude of V_{CHx} and a current I_{LED} flowing through the light string, where Iset/I_{LED}=1/K_{Iset}. Certainly, to ensure that a stable voltage is provided between an anode and a cathode of each backlight string, FIG. 7 further shows a capacitor C_{LED1} connected in parallel to the backlight string Ls1. Certainly, although FIG. 7 does not show a capacitor connected in parallel to another backlight string, it should be understood that the another backlight string has a corresponding capacitor connected in parallel. Similarly, to ensure stability of a channel output voltage of the backlight drive circuit, a capacitor C_{CH} is connected between each channel and the ground GND (FIG. 7 also shows only a capacitor C_{CH1} corresponding to the channel CH1, namely, a capacitor C_{CH1} connected to a cathode of the backlight string).

However, a relationship between a VF of an LED and a current is that a higher voltage indicates a larger turn-on current (as shown in FIG. 9). In addition, under a same turn-on current, VFs of different LEDs are different due to manufacturing processes and materials of the LEDs. In this way, due to a difference of the manufacturing processes of the LEDs, the VFs of the LEDs are finally different. Voltages of channels (generally, a voltage V_{CHx} of the channel is a difference between an anode voltage Vout of a backlight string and a voltage drop V_{LS} of the backlight string) are also different. Because the VF voltages of the LEDs between the channels are different, under a same current I_{LED}, a total voltage forward (namely, V_{LS}s) of backlight strings connected to each channel is different, and voltages V_{CHx} of the channels are also different. In this way, when a voltage V_{CHx} of a channel is high, a loss of the backlight drive circuit is increased, where a loss power P of the channel=V_{CHx}xI_{CHx} (where, I_{CHx}=I_{LED} on a series circuit). In addition, because in the mini LED backlight solution, a plurality of channels are used, a current source (usually including a metal-oxide-semiconductor field-effect transistor (metal-oxide-semiconductor field-effect transistor, MOSFET)) that provides a current to the backlight string on each channel in the backlight drive circuit is integrated with a drive circuit of the current source in a chip, to save a layout area of a board layout. Therefore, the loss is released on the chip in a form of heat, causing the chip to heat up and even damaging the chip.

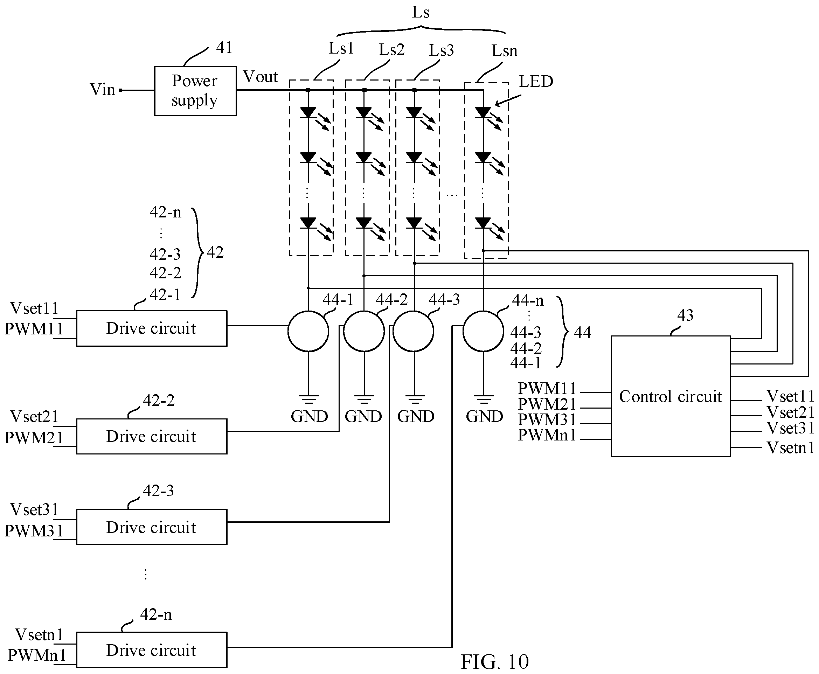

To resolve the foregoing problem, refer to FIG. 10. An embodiment of this application provides a light-emitting device drive circuit. The light-emitting device drive circuit is used in the foregoing backlight module. At least one backlight string Ls (backlight strings Ls1, Ls2, Ls3, ..., and Lsn shown in FIG. 10) is disposed on an indicator board of the backlight module, and the backlight string Ls includes at least one light-emitting unit connected in series. For example, the light-emitting unit may be an LED in FIG. 10. The backlight drive circuit includes: a control circuit 43, at least one drive circuit 42 (the drive circuits 42-1, 42-2, 42-3, ..., 42-n are shown in FIG. 10), and at least one current source 44 (the current sources 44-1, 44-2, 44-3, ..., 44-n are shown in FIG. 10).

A first end of the current source 44 is coupled to a cathode of the backlight string Ls, and an anode of the backlight string Ls is coupled to a power supply 41 (for example, coupled to an output end Vout of the power supply in FIG. 10). A second end of the current source 44 is coupled to ground GND. A drive circuit 42 is coupled to a control end of the current source 41. A control circuit 43 is coupled to the drive circuit 42. The control circuit 43 is further coupled to the first end of the current source 44 or a control end of the current source 44.

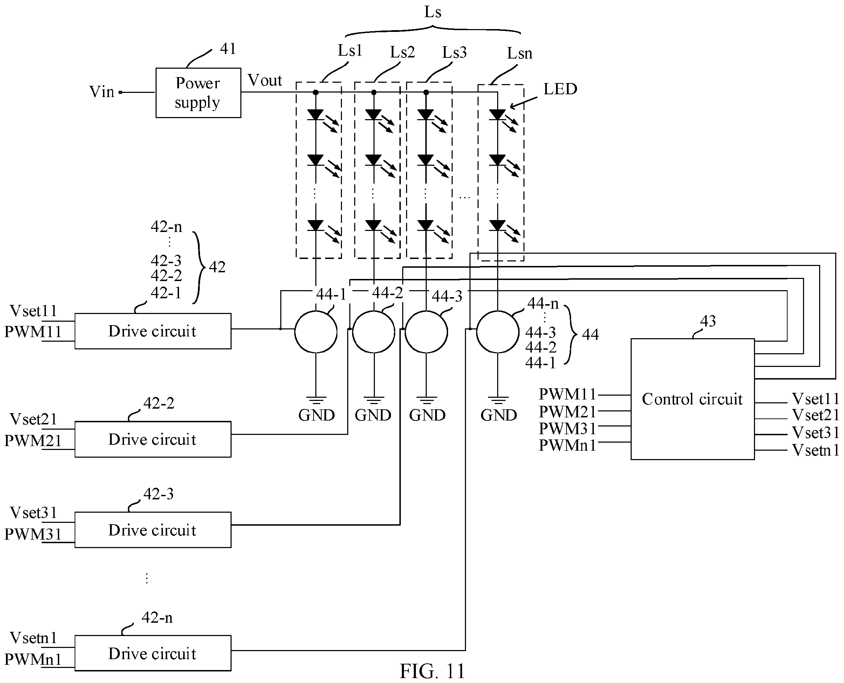

The control circuit 43 is configured to detect an electrical signal at the first end (as shown in FIG. 10) of the current source 44 or the control end (as shown in FIG. 11) of the current source 44. The control circuit 43 is further configured to output a control signal to the drive circuit 42 based on the electrical signal. The drive circuit 42 is configured to adjust, based on the control signal, a current flowing through the first end and the second end of the current source 44, and a voltage at the first end of the current source 44. The control circuit may adjust, based on the electrical signal at the first end of the current source or the control end of the current source, the current flowing through the first end and the second end of the current source and the voltage at the first end of the current source. In this way, the current flowing through the first end and the second end of the current source and the voltage at the first end of the current source are dynamically adjusted by detecting the electrical signal at the first end of the current source or the control end of the current source, to avoid an excessively high loss when the current source provides a current to a backlight string corresponding to the current source.

It should be noted that, because the current source 44 is controlled by the electrical signal at the control end of the current source 44, it may be understood that an electrical signal at the first end of the current source 44 is in a fixed proportion to an electrical signal at the control end of the current source 44, and a specific proportion is mainly limited by parameter selection of an internal component of the current source. In addition, the control circuit 43 may be a logical function circuit like a CPU, an MCU, or an FPGA, and has a plurality of input/output (input/output, I/O) interfaces. These interfaces may input or output a digital signal or an analog signal, and perform some function processing based on the input signal. For example, when this embodiment of this application is implemented, the foregoing electrical signal may be determined, and a control signal may be generated based on a determining result. The threshold may be a preset default value in the control circuit, or the threshold is a minimum value of a voltage corresponding to each electrical signal detected by the control circuit.

Specifically, if the control circuit 43 determines that a voltage corresponding to the electrical signal is greater than a first threshold, the control circuit controls, based on the control signal, the drive circuit 42 to increase the current flowing through the first end and the second end of the current source 44, and decrease the voltage at the first end of the current source 44. In this way, when the control circuit determines, based on an electrical signal at a first end of a current source or a control end of a current source, that a corresponding voltage is greater than a threshold, it indicates that a voltage at the first end of the current source is high, that is, when the current source provides a current to a backlight string corresponding to the current source, an excessively high loss is generated. However, if the voltage at the first end of the current source 44 is directly decreased by reducing a current, it may not be ensured that the backlight string connected to the current source normally emits light. Therefore, in the solution of this application, if the control circuit determines that the voltage corresponding to the electrical signal is greater than the first threshold, the control circuit controls, based on the control signal, the drive circuit to increase the current flowing through the first end and the second end of the current source, and decrease the voltage at the first end of the current source. Therefore, when it is ensured that the backlight string emits light normally, because the voltage at the first end of the current source is decreased, a loss generated on the current source is decreased, and an overall loss of the backlight drive circuit is decreased. In some examples, the voltage at the first end of the current source 44 may alternatively be increased according to a requirement of an actual scenario, to reduce the current flowing through the first end and the second end of the current source 44. For example, when the control circuit 44 determines that a voltage corresponding to the electrical signal is less than a second threshold, the control circuit controls, based on the control signal, the drive circuit to decrease the current flowing through the first end and the second end of the current source, and increase the voltage at the first end of the current source. For example, when the control circuit 44 adjusts (decreases or increases) the voltage at the first end of the current source, the adjustment may be performed based on a specific step. Different steps may be set based on different application scenarios. For example, for a mobile phone with low power consumption, a small step may be set, and for a large-screen device with high power consumption, a large step may be set, to ensure adjustment precision and shorten voltage adjustment time as much as possible.

In addition, it may be understood that, when the voltage at the first end of the current source is decreased based on a specific step, it may be understood that the voltage at the first end of the current source gradually approaches the first threshold. In this way, when the control circuit 44 determines that the voltage at the first end of the current source is less than or equal to the first threshold for a first time after a voltage adjustment, the adjustment is stopped. For another example, it may be understood that, when the voltage at the first end of the current source is increased based on a specific step, it may be understood that the voltage at the first end of the current source gradually approaches the second threshold. In this way, when the control circuit 44 determines that the voltage at the first end of the current source is greater than or equal to the second threshold for a first time after a voltage adjustment, the adjustment is stopped. Certainly, when the step is set to be large, and when the voltage at the first end of the current source is decreased based on the step, if the voltage at the first end of the current source is less than the first threshold for a first time after an adjustment, the voltage at the first end of the current source may alternatively be increased based on a smaller step, so that the voltage at the first end of the current source is closer to the first threshold. Certainly, when the voltage at the first end of the current source is increased based on the step, if the voltage at the first end of the current source is greater than the second threshold for a first time after an adjustment, the voltage at the first end of the current source may alternatively be decreased based on a smaller step, so that the voltage at the first end of the current source is closer to the second threshold. The first threshold and the second threshold may be a same value or different values.

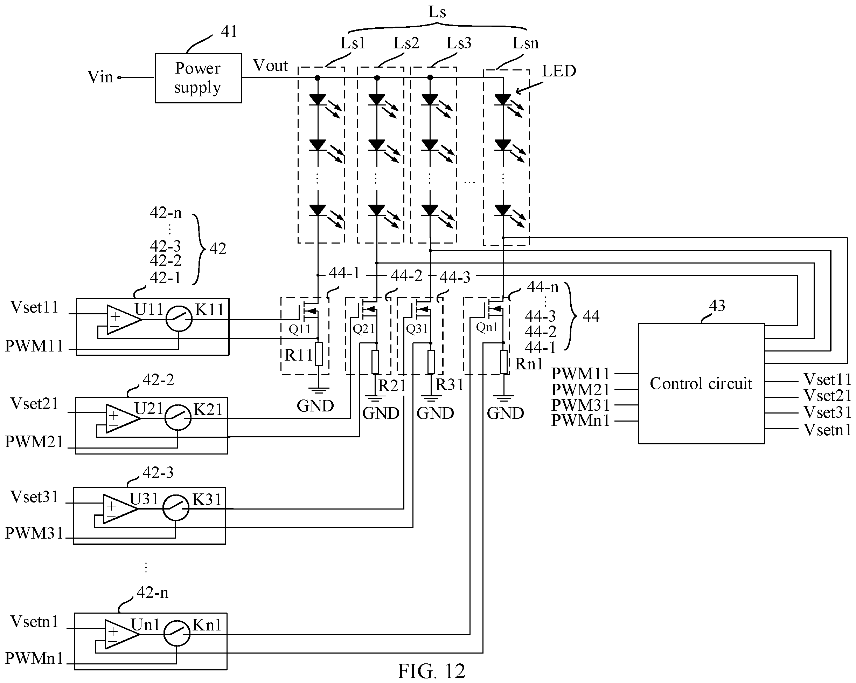

With reference to FIG. 12, in the solution provided in this embodiment of this application, specific structures and a connection manner of the drive circuit 42 and the current source 44 are provided. The drive circuit 42-1 includes an operational amplifier U11 and a switch K11, the drive circuit 42-2 includes an operational amplifier U21 and a switch K21, the drive circuit 42-3 includes an operational amplifier U31 and a switch K31, and the drive circuit 42-n includes an operational amplifier Un1 and a switch Kn1. The current source 44-1 includes a drive transistor Q11 and a resistor R11, the current source 44-2 includes a drive transistor Q21 and a resistor R21, the current source 44-3 includes a drive transistor Q31 and a resistor R31, and the current source 44-n includes a drive transistor Qn1 and a resistor Rn1. The following describes specific structures and a connection manner of the drive circuit 42-1 and the current source 44-1 with reference to FIG. 12. For internal structures and a connection manner of another drive circuit and the current source, refer to the drive circuit 42-1 and the current source 44-1. Details are not described again.

A first end of the drive transistor Q11 is coupled to a first end of the current source 44-1, a second end of the drive transistor Q11 is coupled to a second end (namely, ground GND) of the current source 44-1 through a resistor R11, and a control end of the drive transistor Q11 is coupled to a control end of the current source 44-1. A positive input end (+) of the operational amplifier U11 is coupled to the control circuit 43, and a negative input end (-) of the operational amplifier U11 is coupled to the second end of the drive transistor Q11. An output end of the operational amplifier U11 is coupled to a first end of the switch K11, and a second end of the switch K 11 is coupled to the control end of the drive transistor Q11.

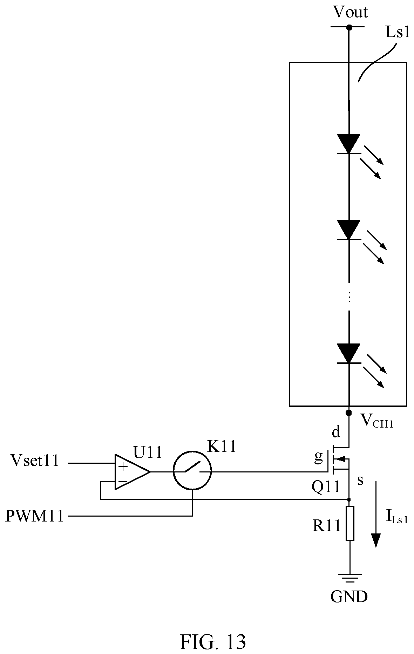

The control signal includes a voltage signal Vset (Vset11, Vset21, Vset31, ..., Vsetn1) and a switch control signal PWM (PWM11, PWM21, PWM31, ..., PWMn1). The positive input end (+) of the operational amplifier U11 is configured to receive the voltage signal Vset11, and a control end of the switch K11 is configured to receive the switch control signal PWM11. When the switch control signal PWM11 is used to turn on the switch, the voltage signal Vset11 is used to control a current (namely, a current flowing through the circuit I_{Ls1} of the light string Ls1) flowing through the first end and the second end of the drive transistor Q11, and the switch control signal PWM11 is used to control a voltage (namely, a channel voltage V_{CH1} of the light string Ls1) at the first end of the drive transistor Q11. To simplify a circuit design and reduce costs, with reference to FIG. 13, all drive transistors Q11, Q21, Q31, ..., and Qn1 are N-type transistors. In this case, a first end of the drive transistor Q11 is a d electrode, a second end is an s electrode, and a control end is a g electrode. When the drive transistor Q11 uses an N-type transistor, the s electrode is directly connected to the ground GND (at a fixed value) through the resistor R11, and the drive transistor Q11 can be turned on as long as a voltage of the g electrode is higher than a voltage of the s electrode, for example, fixed to a voltage at Vin or Vout. When the drive transistor Q11 is turned on, a current flows from the d electrode to the s electrode. Therefore, a circuit design is simple. When another manner is used, for example, all the drive transistors Q11, Q21, Q31, ..., and Qn1 are P-type transistors, the d electrode of the drive transistor Q11 needs to be connected to the ground through R11. When the drive transistor Q11 is turned on, a current flows from the s electrode to the d electrode, and a voltage of the s electrode is not fixed (depending on a voltage division of a backlight string), and a voltage of the g electrode that controls the drive transistor Q11 to be turned on cannot be determined. In this case, an isolated power supply controller or a bootstrap boost circuit needs to be designed separately.

Specifically, with reference to FIG. 13, specific functions of the drive circuit 42-1 and the current source 44-1 are described as follows: Because the negative input end (-) of the operational amplifier U11 is connected to the transistor Q11 and is directly connected to the s electrode of Q11, when the switch K11 turns on the output end of U11 and the g electrode of Q11, closed-loop feedback is formed. In this case, the voltage signal Vset11 input by the positive input end (+) of U11 is equal to a voltage of the s electrode of Q11. Therefore, the following formulas may be constructed:
Vout=V_{Ls1}+V_{CH1}, formula 1, where V_{LS1} is a divided voltage of the backlight string Ls1, and V_{CH1} is a voltage of the d electrode of Q11.
V_{Ls1}=VF1+VF2+VF3+, ..., VFm, formula 2, where m is a quantity of LEDs on the backlight string LS1, and VF is a voltage forward drop of the LED.
I_{Ls1}=Vset11/R11, formula 3, where I_{Ls1} is a current of the backlight string Ls1.
Vset11=V_{CH1} × D_{PWM11}, formula 4, where D_{PWM11} is a duty cycle of the switch control signal PWM11.
I=I₀ exp (qVF/nkT-1), formula 5, where q, n, k, and T are constants, and I₀ is a reverse saturation current of the LED.

In this way, based on the foregoing formula 1 to formula 5, when V_{CH1} is high, Vset11 may be adjusted and increased, and it may be learned from formula 3 that I_{Ls1} is caused to increase. In addition, based on formula 5, when I_{Ls1} increases, VF increases. Therefore, it may be learned from formula 2 that V_{Ls1} is to be increased. With reference to formula 1, because Vout is fixed, V_{CH1} needs to be decreased. Based on formula 4, because Vset11 is increased and V_{CH1} is decreased, to balance formula 4, D_{PWM11} needs to be increased. In this way, the current I_{Ls1} of the backlight string is increased or maintained to ensure normal light-emitting of the backlight string, and V_{CH1} is decreased. In this way, an overall loss of the backlight drive circuit is decreased. Certainly, in some examples, when V_{CH1} is small, if V_{CH1} needs to be increased, Vset11 may be adjusted to be decreased, and D_{PWM11} may be decreased.

Certainly, the foregoing description is mainly based on an example in which the control circuit 43 detects V_{CH1}. Generally, a relationship between a voltage of the g electrode and a voltage of the d electrode of Q11 is fixed. Therefore, because the voltage of the g electrode of Q11 reflects the voltage of the d electrode, the voltage of the g electrode may also be used as the foregoing electrical signal. When the voltage of the g electrode is greater than a threshold (it may be understood that thresholds set for the g electrode and the d electrode are different), it indicates that V_{CH1} is high.

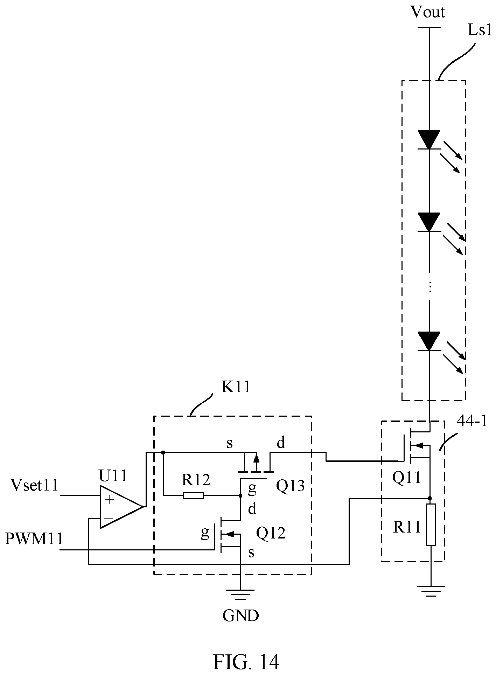

Further, with reference to FIG. 14, the switch K11 includes a transistor Q12 and a transistor Q13. A first end of the transistor Q12 is coupled to the ground GND, a second end of the transistor Q12 is coupled to a control end of the transistor Q13, and a control end of the transistor Q12 is coupled to the control circuit 43. A first end of the transistor Q13 is coupled to the output end of the operational amplifier U11, a second end of the transistor Q13 is coupled to the control end of the drive transistor Q11, and the control end of the transistor Q13 is further coupled to the output end of the operational amplifier U11 through the resistor R12. The transistor Q12 is configured to periodically turn on the first end and the second end of the transistor Q12 under control of the switch control signal V set 1. The transistor Q13 is configured to: when the first end and the second end of the transistor Q12 are turned on, turn on the first end and the second end of the transistor Q13, to transmit a signal of the output end of the operational amplifier U11 to the control end of the drive transistor Q11.

For example, the transistor Q12 may be an N-type transistor, and the transistor Q13 may be a P-type transistor. When the transistor Q12 is an N-type transistor, an s electrode is used as a first end, a d electrode is used as a second end, and a g electrode is used as a control end. When the transistor Q13 is a P-type transistor, an s electrode is used as a first end, a d electrode is used as a second end, and a g electrode is used as a control end. In this way, when Q12 is turned on, a current flows from the d electrode to the s electrode, and when Q13 is turned on, a current flows from the s electrode to the d electrode. In addition, the GND is connected to the s electrode of Q12 at a fixed voltage, which facilitates a circuit design. In addition, when Q12 is turned on, the resistor R12 provides a fixed voltage for the s electrode and the g electrode of Q13. As long as the voltage of the s electrode is greater than that of the g electrode, and meets a threshold condition for turn-on, Q13 can be turned on.

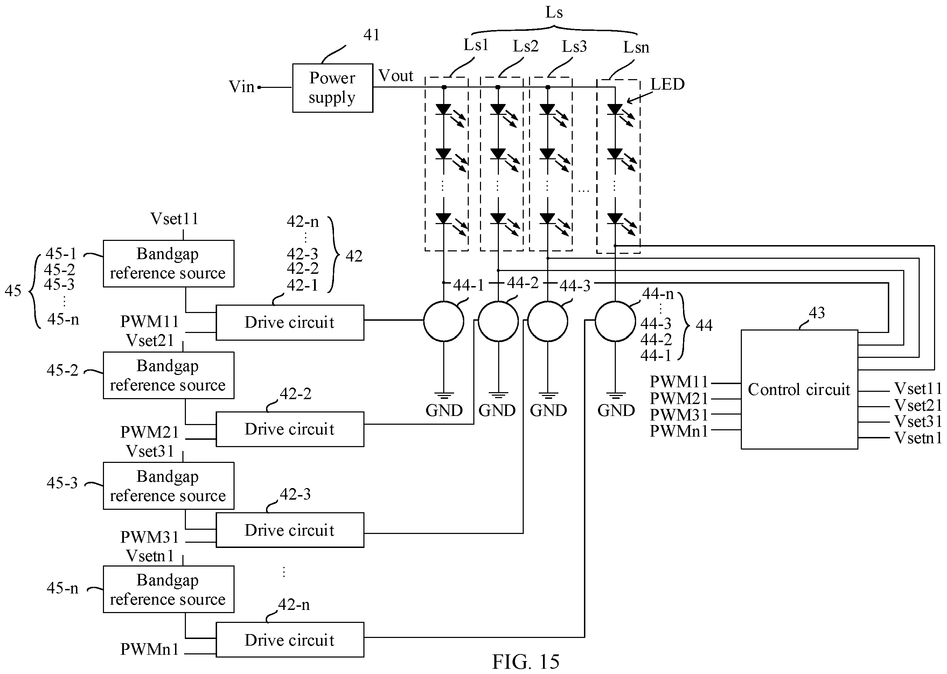

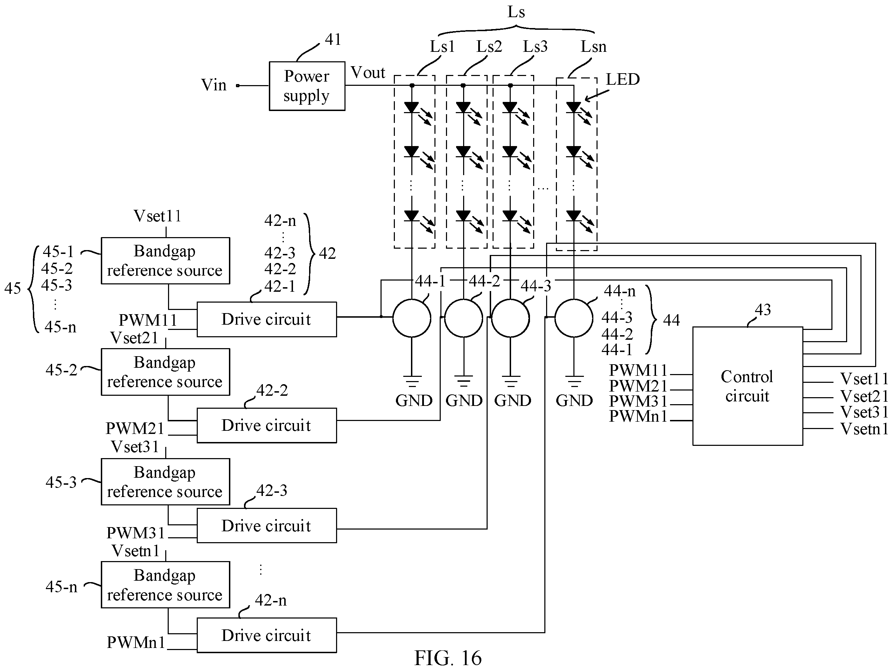

With reference to FIG. 15, the backlight drive circuit further includes a bandgap reference source 45 (45-1, 45-2, 45-3, ..., 45-n). As shown in FIG. 15, the bandgap reference source 45-1 is connected between the drive circuit 42-1 and the control circuit 43; the bandgap reference source 45-2 is connected between the drive circuit 42-2 and the control circuit 43; the bandgap reference source 45-3 is connected between the drive circuit 42-3 and the control circuit 43; and the bandgap reference source 45-n is connected between the drive circuit 42-n and the control circuit 43. The bandgap reference source 45 (45-1, 45-2, 45-3, ..., 45-n) is configured to adjust a voltage signal Vset (Vset11, Vset21, Vset31, ..., Vsetn1) based on a preset proportion. Certainly, the control circuit 43 shown in FIG. 15 is used to detect an electrical signal at the first end of the current source 44. As shown in FIG. 16, the bandgap reference source 45 may alternatively be applied to a solution in which the control circuit 43 is used to detect the electrical signal at the control end of the current source 44.

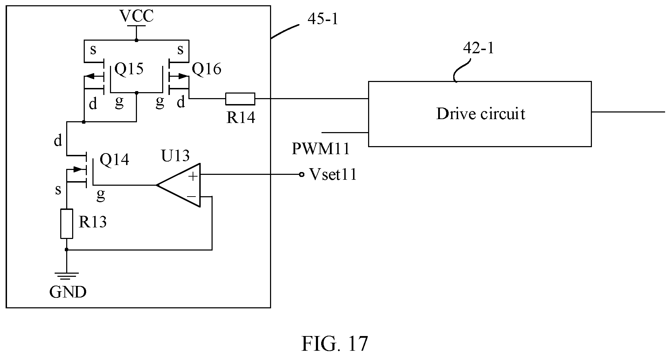

As shown in FIG. 17, a diagram of a specific structure of the bandgap reference source 45 is provided, including: transistors Q14, Q15, and Q16, an operational amplifier U13, and resistors R13 and R14. A first end of Q15 is connected to a power supply end VCC, and a first end of Q16 is connected to the power supply end VCC. A control end of Q15 is connected to a control end of Q16, a second end of Q15 is connected to the control end of Q15 and a first end of Q14, and a second end of Q14 is connected to ground GND through a resistor R13. A positive input end (+) of the operational amplifier is connected to the control circuit 43 and is configured to receive a voltage signal V set 1. A negative input end (-) of the operational amplifier U13 is connected to the ground GND. A second end of Q16 is connected to the drive circuit 42-1 (specifically, connected to the positive input end (+) of the operational amplifier U11 of the drive circuit 42-1) through the resistor R14. In this way, the bandgap reference source 45 can adjust, based on a proportional relationship between the resistors R13 and R14, a ratio of Vset11 to a voltage output to the drive circuit 42-1. In this way, when a control step of the control circuit 43 for Vset11 is large (for example, 50 mV), a voltage signal output to the positive input end (+) of the operational amplifier U11 may be adjusted to a smaller step (for example, 10 mv) by adjusting the proportional relationship between the resistors R13 and R14. In this way, when a current of the backlight string Ls1 is controlled based on the formula 3, smaller current precision can be implemented, so that backlight brightness can be adjusted more accurately. In addition, to reduce circuit design complexity and costs, Q15 and Q16 may be P-type transistors, and Q14 may be an N-type transistor. When the transistor Q14 is an N-type transistor, an s electrode is used as a second end, a d electrode is used as a first end, and a g electrode is used as a control end. When the transistor Q15 and Q16 are P-type transistors, s electrodes are used as first ends, d electrodes are used as second ends, and g electrodes are used as control ends.

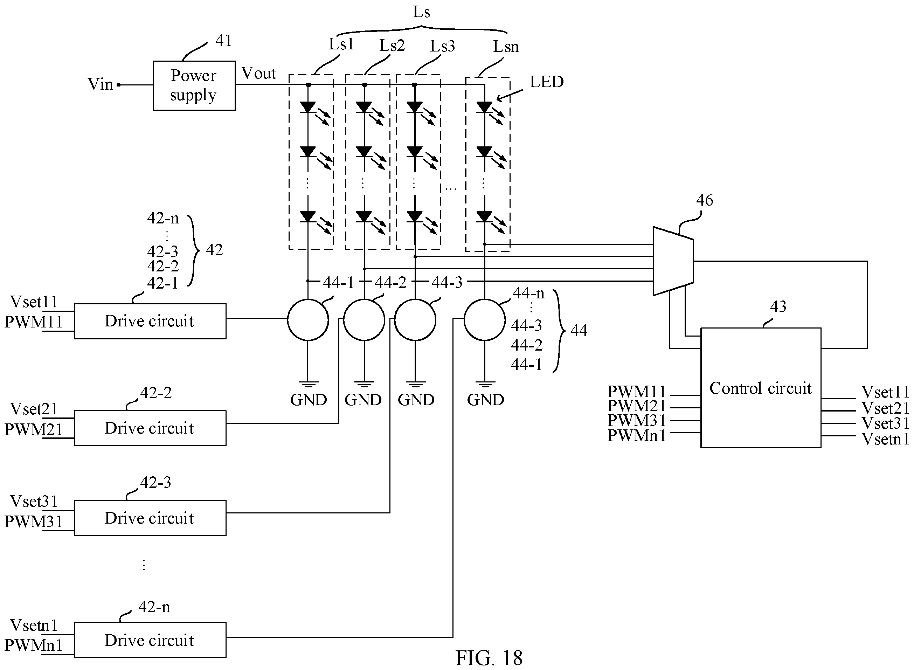

Certainly, in some scenarios, each indicator sub board of the backlight module needs to provide a backlight string of 16, 32, 48, or more channels. Due to a limitation of a quantity of ports provided by the control circuit 43, when the control circuit 43 cannot provide ports that correspond to the channels in quantity to detect the electrical signal at the first end or the control end of the current source 44, as shown in FIG. 18, the backlight drive circuit provided in embodiments of this application further includes a selector 46. The selector 46 includes a plurality of input ends, one output end, and at least one control end, a first end of each current source 44 (44-1, 44-2, 44-3, ..., 44-n) or a control end of the current source is coupled to the input end of the selector 46, the output end of the selector 46 is coupled to the control circuit 43, and at least one control end of the selector 46 is coupled to the control circuit 43. The control circuit 43 is configured to output a gating control signal to the selector 46 through the at least one control end of the selector 46. The selector 46 is configured to turn on any input end of the selector 46 and the output end of the selector 46 based on the gating control signal.

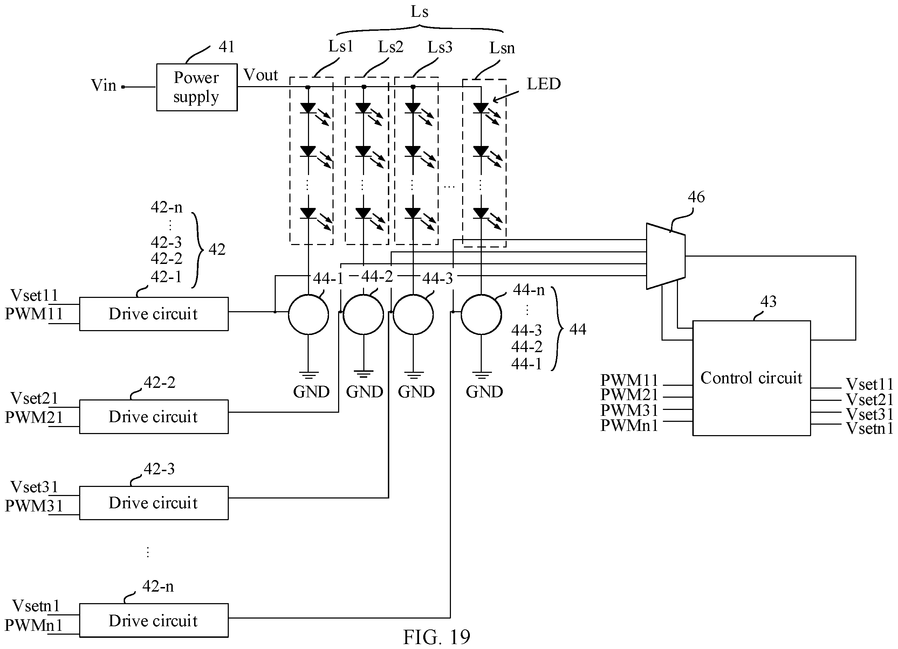

For example, when the indicator sub board includes backlight strings (Ls1, Ls2, Ls3, and Ls4) of four channels, the selector 46 may include four input ends and two control ends. In this way, the control circuit 43 may input two-bit binary code to the two control ends to implement gating control on the selector 46. For example, the control circuit 43 inputs a binary code 00 to the selector 46 through the two control ends, and the selector 46 turn on a first input end and the output end. In this way, the first end of the current source 44-1 connected to the backlight string Ls1 is connected to the control circuit 43, to detect an electrical signal at the first end of the current source 44-1. The control circuit 43 inputs a binary code 01 to the selector 46 through the two control ends, and the selector 46 turns on a second input end and the output end. In this way, the first end of the current source 44-2 connected to the backlight string Ls2 is connected to the control circuit 43, to detect an electrical signal at the first end of the current source 44-2. The control circuit 43 inputs a binary code 10 to the selector 46 through the two control ends, and the selector 46 turns on a third input end and the output end. In this way, the first end of the current source 44-3 connected to the backlight string Ls3 is connected to the control circuit 43, to detect an electrical signal at the first end of the current source 44-3. The control circuit 43 inputs a binary code 11 to the selector 46 through the two control ends, and the selector 46 turns on a fourth input end and the output end. In this way, the first end of the current source 44-4 connected to the backlight string Ls4 is connected to the control circuit 43, to detect an electrical signal at the first end of the current source 44-4. In this way, the electrical signal at the first end of each current source 44 is detected in a time division manner, so that complexity of the control circuit 43 is reduced. Certainly, the control circuit 43 shown in FIG. 18 is used to detect an electrical signal at the first end of the current source 44. As shown in FIG. 19, the selector 46 may alternatively be applied to a solution in which the control circuit 43 is used to detect the electrical signal at the control end of the current source 44.

In the foregoing solution, the control circuit 43 mainly detects a signal at the first end or the control end of the current source 44 in an analog domain, that is, directly detects an analog signal at the first end or the control end of the current source 44.

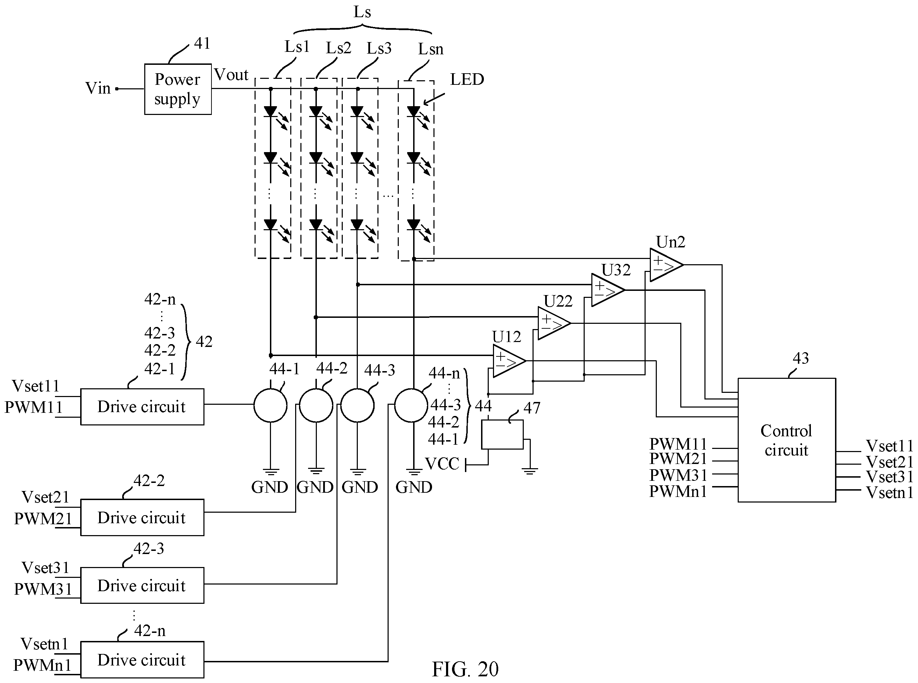

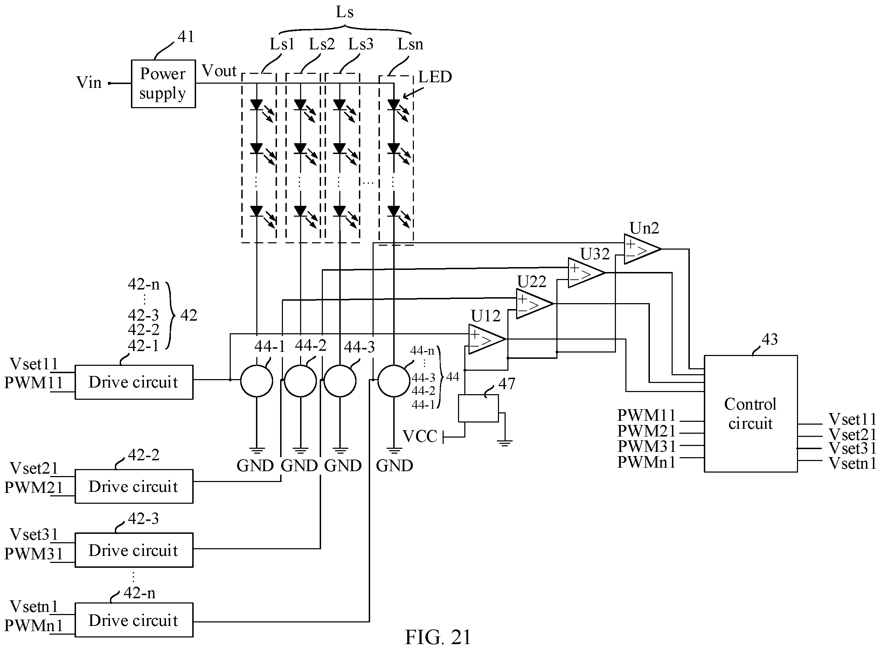

In some solutions, the control circuit 43 may alternatively detect a signal at the first end or the control end of the current source 44 in the digital domain. Refer to FIG. 20. The backlight drive circuit further includes at least one comparator (U12, U22, U32, ..., Un2) and a reference voltage generation circuit 47. A connection relationship of the comparator U12 is used as an example. A positive input end of the U12 is coupled to a first end of the current source 44-1 or a control end of the current source 44-1, and a negative input end of the comparator U12 is coupled to the reference voltage generation circuit 47. An output end of the comparator U12 is coupled to the control circuit 43. The reference voltage generation circuit 47 is configured to generate a first reference voltage Vref. The comparator U12 is configured to: compare a voltage at the first end of the current source 44-1 with the first reference voltage Vref, or compare a voltage at the control end of the current source 44-1 with the first reference voltage Vref, and output a comparison result at the output end of the comparator U12. For example, when the voltage at the first end of the current source 44-1 is greater than the first reference voltage Vref, or the voltage at the control end of the current source 44-1 is greater than the first reference voltage Vref, a comparison result 1 is output; otherwise, a comparison result 0 is output. The control circuit 43 is configured to determine an electrical signal at the first end of the current source 44-1 or the control end of the current source 44-1 based on the comparison result. The connection relationships and functions between the other comparators U22, U32, ..., and Un2 and the corresponding current sources 44-2, 44-3, ..., and 44-n are similar to those of the U12. Details are not described herein again. In this way, when the first reference voltage Vref gradually increases at a specific step, a comparator Ux1 connected to a current source 44-x whose voltage is first less than the first reference voltage Vref outputs 0, and a comparator connected to another current source 44 outputs 1. In this case, the control circuit 43 may control the reference voltage generation circuit 47 to maintain the first reference voltage Vref, and adjust a voltage at a first end or a control end of the another current source 44 by adjusting Vset and PDM of a drive circuit connected to the another current source 44 until all comparators output 0, so that the voltage at the first end (or the voltage at the control end) of each current source 44 is adjusted to a lower close level or same level. Certainly, in the foregoing, a voltage at a first end (or a voltage at a control end) of a specific current source 44 is used as a reference to adjust a voltage at a first end (or a voltage at a control end) of another current source 44. Certainly, in order to enable voltages at first ends (or voltages at control ends) of all current sources 44 to stabilize at a specified voltage, the first reference voltage Vref may alternatively be configured as the specified voltage. Certainly, the control circuit 43 shown in FIG. 20 detects the electrical signal at the first end of the current source 44. As shown in FIG. 21, that the control circuit 43 detects the signal at the first end or the control end of the current source 44 in the digital domain may also be applied to a solution in which the control circuit 43 detects the electrical signal at the control end of the current source 44.

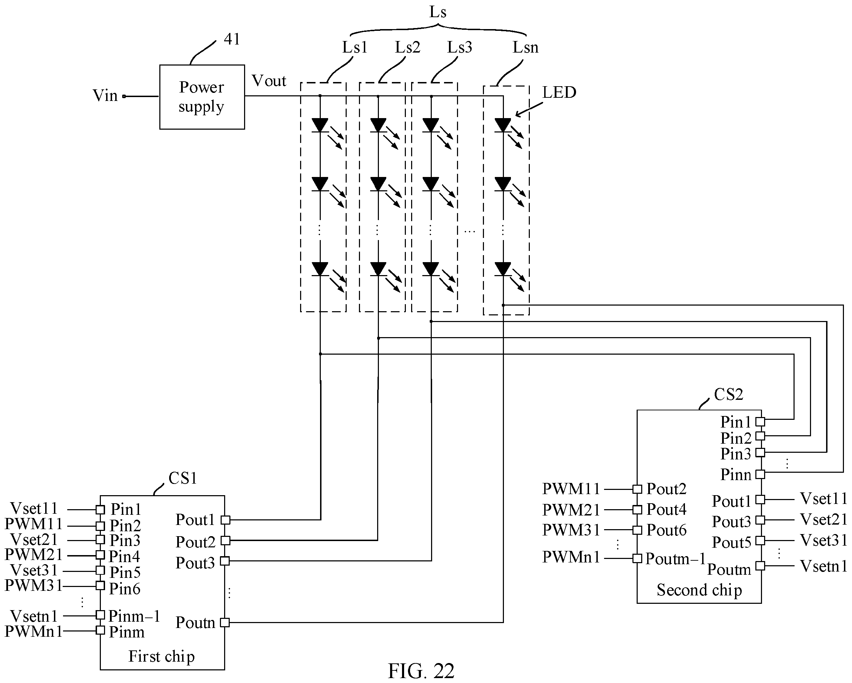

In addition, with reference to FIG. 22, a first chip CS1 is provided, and is used in a backlight module. At least one backlight string is disposed on an indicator board of the backlight module, and the backlight string includes at least one light-emitting unit connected in series. The first chip CS1 includes: the at least one drive circuit 42 and at least one current source 44. With reference to the connection manners in FIG. 10 and FIG. 11, a first end of the current source 44 is configured to be coupled to a cathode of the backlight string Ls, and an anode of the backlight string Ls is coupled to the power supply 41. A second end of the current source 44 is configured to be coupled to the ground GND. The drive circuit 42 is coupled to a control end of the current source 44, and the drive circuit 42 is further coupled to the control circuit 43. The first end of the current source 44 or the control end of the current source 44 is further configured to be coupled to the control circuit 43. For functions of the drive circuit 42, the control circuit 43, and the current source 44, refer to the foregoing examples. Details are not described herein again. Specifically, refer to FIG. 22. A package structure of the first chip CS1 further includes input pins (Pin to Pinx), and output pins (pout1 to poutn). In an example shown in FIG. 22, a second chip CS2 is further provided. The second chip CS2 includes the foregoing control circuit 43. For a function and a connection manner of the control circuit 43, refer to the foregoing descriptions in FIG. 10 and FIG. 11. Details are not described herein again. Specifically, refer to FIG. 22. A package structure of the second chip CS2 further includes input pins (Pin to Pinx), and output pins (pout1 to poutn), where m=2n. The input pins (Pin to Pinm) of the first chip CS1 are in a one-to-one connection to the output pins (pout1 to poutm) of the second chip CS2, to provide a connection between the control circuit 43 and each drive circuit 42. The output pins (pout1 to poutn) of the first chip CS1 are separately connected to cathodes of one backlight string Ls (Ls1 to Lsn), and the input pins (Pin to Pinn) of the second chip CS2 are separately connected to cathode Ls (Ls1 to Lsn) of one backlight string. In this way, a solution of detecting an electrical signal at a first end of each current source is implemented.

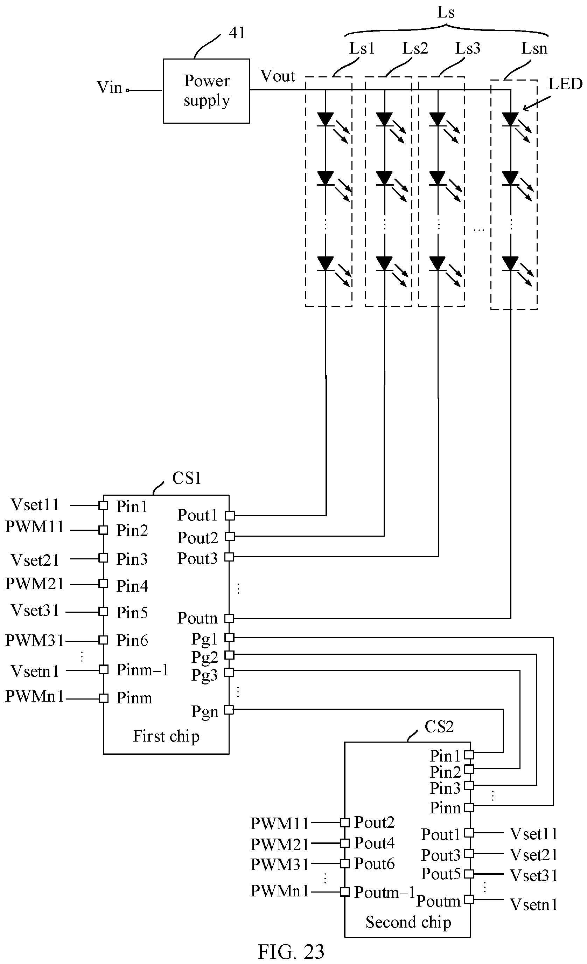

In the solution provided in FIG. 23, compared with that shown in FIG. 22, to implement a solution of detecting an electrical signal at a control end of each current source, the first chip CS1 further includes external pins (pg1 to pgn), where each external pin (pg1 to pgn) is connected to a control end (namely, a g electrode of a drive transistor) of a current source. In the solution provided in FIG. 23, the input pins (Pin to Pinn) of the second chip CS2 are separately connected to external pins (pg1 to pgn) of the first chip CS1. Therefore, a solution of detecting an electrical signal at a control end of each current source is implemented. In addition, when the backlight drive circuit further includes one or more of the bandgap reference source 45, the selector 46, the comparator (U12, U22, ..., Un2), and the reference voltage generation circuit 47, the backlight drive circuit may be selectively integrated into the first chip CS1 or the second chip CS2. For example, the bandgap reference source 45 may be integrated into the first chip CS1, and the selector 46, the comparator (U12, U22, ..., Un2), and the reference voltage generation circuit 47 may be integrated into the second chip CS2.

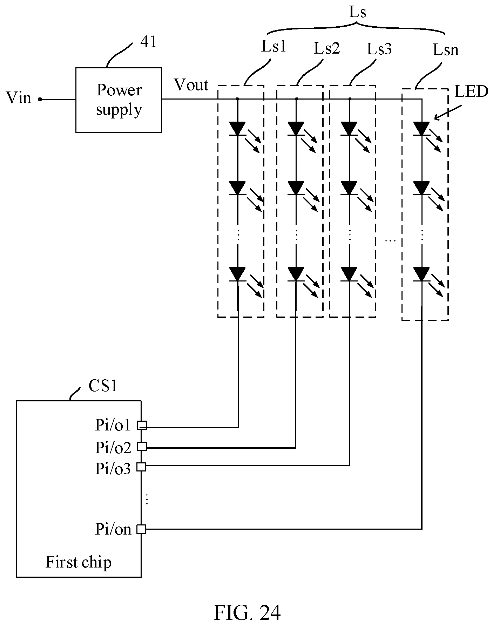

In the solution provided in FIG. 24, the second chip CS2 may be further integrated into the first chip CS1. In this way, the first chip CS1 includes at least one drive circuit 42, the control circuit 43, and at least one current source 44 in the foregoing backlight drive circuit. For functions of the drive circuit 42, the control circuit 43, and the current source 44, refer to the foregoing examples. Details are not described again. Specifically, refer to the package structure of the first chip CS1 provided in FIG. 24. The package structure includes pins (Pi/o1 to Pi/on), where each pin (Pi/o1 to Pi/on) is connected to a cathode of one light string, to provide a connection between the backlight drive circuit and the backlight string. In addition, when the backlight drive circuit further includes one or more of the bandgap reference source 45, the selector 46, the comparator (U12, U22, ..., Un2), and the reference voltage generation circuit 47, the backlight drive circuit may be selectively integrated into the first chip CS1.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" does not exclude another component or another step, and "a" or "one" does not exclude a meaning of plurality. Some measures are recorded in dependent claims that are different from each other, but this does not mean that these measures cannot be combined to produce a better effect.

The foregoing has described embodiments of this application. The foregoing descriptions are examples, not exhaustive, and are not limited to the disclosed embodiments. Many modifications and changes are apparent to those of ordinary skill in the art without departing from the scope and spirit of the illustrated embodiments. The selection of terms used herein is intended to best explain the principles of embodiments, practical applications, or improvements to technologies in the market, or to enable another person of ordinary skill in the art to understand embodiments disclosed herein.

## Claims

1. A backlight drive circuit, used in a backlight module, wherein at least one backlight string is disposed on an indicator board of the backlight module, the backlight string comprises at least one light-emitting unit connected in series, and the backlight drive circuit comprises a control circuit, at least one drive circuit, and at least one current source;
a first end of the current source is configured to be coupled to a cathode of the backlight string, and an anode of the backlight string is configured to be coupled to a power supply; a second end of the current source is configured to be coupled to ground; the drive circuit is coupled to a control end of the current source; and the control circuit is coupled to the drive circuit, and the control circuit is further coupled to the first end of the current source or the control end of the current source;
the control circuit is configured to detect an electrical signal at the first end of the current source or the control end of the current source;
the control circuit is further configured to output a control signal to the drive circuit based on the electrical signal; and
the drive circuit is configured to adjust, based on the control signal, a current flowing through the first end and the second end of the current source and a voltage at the first end of the current source.

2. The backlight drive circuit according to claim 1, wherein the drive circuit comprises an operational amplifier and a first switch; and the current source comprises a drive transistor and a first resistor;
a first end of the drive transistor is coupled to the first end of the current source, a second end of the drive transistor is coupled to the second end of the current source through the first resistor, and a control end of the drive transistor is coupled to the control end of the current source;
a positive input end of the operational amplifier is coupled to the control circuit, and a negative input end of the operational amplifier is coupled to the second end of the drive transistor;
an output end of the operational amplifier is coupled to a first end of the first switch, and a second end of the first switch is coupled to the control end of the drive transistor;
the control signal comprises a voltage signal and a switch control signal; and
the positive input end of the operational amplifier is configured to receive the voltage signal, and a control end of the first switch is configured to receive the switch control signal, wherein
when the switch control signal is used to turn on the first switch, the voltage signal is used to control a current flowing through the first end and the second end of the drive transistor, and the switch control signal is used to control a voltage at the first end of the drive transistor.

3. The backlight drive circuit according to claim 1 or 2, wherein
if the control circuit determines that a voltage corresponding to the electrical signal is greater than a first threshold, controlling, by the control circuit based on the control signal, the drive circuit to increase the current flowing through the first end and the second end of the current source, and decrease the voltage at the first end of the current source.

4. The backlight drive circuit according to claim 1 or 2, wherein
if the control circuit determines that a voltage corresponding to the electrical signal is less than a second threshold, controlling, by the control circuit based on the control signal, the drive circuit to decrease the current flowing through the first end and the second end of the current source, and increase the voltage at the first end of the current source.

5. The backlight drive circuit according to any one of claims 1 to 4, further comprising a bandgap reference source, wherein the bandgap reference source is connected between the drive circuit and the control circuit; and
the bandgap reference source is configured to adjust the voltage signal based on a predetermined proportion.

6. The backlight drive circuit according to claim 2, wherein the first switch comprises a first transistor and a second transistor;
a first end of the first transistor is coupled to the ground, a second end of the first transistor is coupled to a control end of the second transistor, and a control end of the first transistor is coupled to the control circuit;
a first end of the second transistor is coupled to the output end of the operational amplifier, a second end of the second transistor is coupled to the control end of the drive transistor, and the control end of the second transistor is further coupled to the output end of the operational amplifier through a second resistor;
the first transistor is configured to periodically turn on the first end of the first transistor and the second end of the first transistor under control of the switch control signal; and
the second transistor is configured to: when the first end of the first transistor and the second end of the first transistor are turned on, turn on the first end of the second transistor and the second end of the second transistor, so as to transmit a signal at the output end of the operational amplifier to the control end of the drive transistor.

7. The backlight drive circuit according to claim 6, wherein the first transistor comprises an N-type transistor, and the second transistor comprises a P-type transistor; the first end of the first transistor is a source of the N-type transistor; the second end of the first transistor is a drain of the N-type transistor, and the control end of the first transistor is a gate of the N-type transistor; the first end of the second transistor is a source of the P-type transistor; and the second end of the second transistor is a drain of the P-type transistor, and the control end of the second transistor is a gate of the P-type transistor.

8. The backlight drive circuit according to any one of claims 1 to 7, further comprising: at least one comparator and a reference voltage generation circuit, wherein
a positive input end of the comparator is coupled to the first end of the current source or the control end of the current source, a negative input end of the comparator is coupled to the reference voltage generation circuit, and an output end of the comparator is coupled to the control circuit;
the reference voltage generation circuit is configured to generate a first reference voltage; the comparator is configured to: compare the voltage at the first end of the current source with the first reference voltage, or compare a voltage at the control end of the current source with the first reference voltage, and output a comparison result at the output end of the comparator; and
the control circuit is configured to determine the electrical signal at the first end of the current source or the control end of the current source based on the comparison result.

9. The backlight drive circuit according to any one of claims 1 to 8, further comprising a selector, wherein the selector comprises a plurality of input ends, one output end, and at least one control end, the first end of the current source or the control end of the current source is coupled to the input end of the selector, the output end of the selector is coupled to the control circuit, and the at least one control end of the selector is coupled to the control circuit;
the control circuit is configured to output a gating control signal to the selector through the at least one control end of the selector; and
the selector is configured to turn on any input end of the selector and the output end of the selector based on the gating control signal.

10. A chip, used in a backlight module, wherein at least one backlight string is disposed on an indicator board of the backlight module, the backlight string comprises at least one light-emitting unit connected in series, and the chip comprises at least one drive circuit and at least one current source;
a first end of the current source is configured to be coupled to a cathode of the backlight string, and an anode of the backlight string is coupled to a power supply; a second end of the current source is configured to be coupled to ground; the drive circuit is coupled to a control end of the current source; the drive circuit is further configured to be coupled to the control circuit; and the first end of the current source or the control end of the current source is further configured to be coupled to the control circuit;
the control circuit is configured to detect an electrical signal at the first end of the current source or the control end of the current source;
the control circuit is further configured to output a control signal to the drive circuit based on the electrical signal; and
the drive circuit is configured to adjust, based on the control signal, a current flowing through the first end and the second end of the current source and a voltage at the first end of the current source.

11. The chip according to claim 10, wherein the drive circuit comprises an operational amplifier and a first switch; and the current source comprises a drive transistor and a first resistor;
a first end of the drive transistor is coupled to the first end of the current source, a second end of the drive transistor is coupled to the second end of the current source through the first resistor, and a control end of the drive transistor is coupled to the control end of the current source;
a positive input end of the operational amplifier is coupled to the control circuit, and a negative input end of the operational amplifier is coupled to the second end of the drive transistor;
an output end of the operational amplifier is coupled to a first end of the first switch, and a second end of the first switch is coupled to the control end of the drive transistor;
the control signal comprises a voltage signal and a switch control signal; and
the positive input end of the operational amplifier is configured to receive the voltage signal, and a control end of the first switch is configured to receive the switch control signal, wherein
when the switch control signal is used to turn on the first switch, the voltage signal is used to control a current flowing through the first end and the second end of the drive transistor, and the switch control signal is used to control a voltage at the first end of the drive transistor.

12. The chip according to claim 10 or 11, wherein
if the control circuit determines that a voltage corresponding to the electrical signal is greater than a first threshold, the control circuit controls, based on the control signal, the drive circuit to increase the current flowing through the first end and the second end of the current source, and decrease the voltage at the first end of the current source.

13. The chip according to claim 10 or 11, wherein
if the control circuit determines that a voltage corresponding to the electrical signal is less than a second threshold, the control circuit controls, based on the control signal, the drive circuit to decrease the current flowing through the first end and the second end of the current source, and increase the voltage at the first end of the current source.

14. The chip according to any one of claims 10 to 13, further comprising a bandgap reference source, wherein the bandgap reference source is connected between the positive input end of the operational amplifier and the control circuit; and
the bandgap reference source is configured to adjust the voltage signal based on a predetermined proportion.

15. The chip according to claim 11, wherein the first switch comprises a first transistor and a second transistor;
a first end of the first transistor is coupled to the ground, a second end of the first transistor is coupled to a control end of the second transistor, and a control end of the first transistor is coupled to the control circuit;
a first end of the second transistor is coupled to the output end of the operational amplifier, a second end of the second transistor is coupled to the control end of the drive transistor, and the control end of the second transistor is further coupled to the output end of the operational amplifier through a second resistor;
the first transistor is configured to periodically turn on the first end of the first transistor and the second end of the first transistor under control of the switch control signal; and
the second transistor is configured to: when the first end of the first transistor and the second end of the first transistor are turned on, turn on the first end of the second transistor and the second end of the second transistor, so as to transmit a signal at the output end of the operational amplifier to the control end of the drive transistor.

16. The chip according to claim 15, wherein the first transistor comprises an N-type transistor, and the second transistor comprises a P-type transistor; the first end of the first transistor is a source of the N-type transistor; the second end of the first transistor is a drain of the N-type transistor, and the control end of the first transistor is a gate of the N-type transistor; the first end of the second transistor is a source of the P-type transistor; and the second end of the second transistor is a drain of the P-type transistor, and the control end of the second transistor is a gate of the P-type transistor.

17. The chip according to any one of claims 10 to 16, further comprising: at least one comparator and a reference voltage generation circuit, wherein
a positive input end of the comparator is coupled to the first end of the current source or the control end of the current source, a negative input end of the comparator is coupled to the reference voltage generation circuit, and an output end of the comparator is coupled to the control circuit;
the reference voltage generation circuit is configured to generate a first reference voltage;
the comparator is configured to: compare the voltage at the first end of the current source with the first reference voltage, or compare a voltage at the control end of the current source with the first reference voltage, and output a comparison result at the output end of the comparator; and
the control circuit is configured to determine the electrical signal at the first end of the current source or the control end of the current source based on the comparison result.

18. The chip according to any one of claims 10 to 17, further comprising a selector, wherein the selector comprises a plurality of input ends, one output end, and at least one control end, the first end of the current source or the control end of the current source is coupled to the input end of the selector, the output end of the selector is coupled to the control circuit, and the at least one control end of the selector is coupled to the control circuit;
the control circuit is configured to output a gating control signal to the selector through the at least one control end of the selector; and
the selector is configured to turn on any input end of the selector and the output end of the selector based on the gating control signal.

19. The chip according to any one of claims 10 to 18, wherein the control circuit is comprised in the chip.

20. A backlight module, wherein the backlight module comprises a backplane, a flat plate, an indicator board, and a diffusion plate, the flat plate is located between the backplane and the indicator board, the indicator board is located between the flat plate and the diffusion plate, at least one backlight string is disposed on the indicator board, and the backlight drive circuit according to any one of claims 1 to 9 or the chip according to any one of claims 10 to 19 is disposed on the backplane.

21. An electronic device, comprising the backlight module according to claim 20 and a liquid crystal panel disposed on the backlight module.
